# EUROPEAN PATENT APPLICATION

(11) **EP 4 224 368 A1**
(43) Date of publication of application: **09.08.2023**
(21) Application number: 21875083.4
(22) Date of filing: 03.09.2021
(51) Int. Cl.: G06N 3/02

(54) **INFORMATION PROCESSING SYSTEM, AND INFORMATION PROCESSING METHOD**

(30) Priority: 29.09.2020 US 202063084776 P
(71) Applicant: Sony Semiconductor Solutions Corporation, Atsugi-shi, Kanagawa 243-0014 (JP)
(72) Inventor: SHIMOMURA, Munehiro, Atsugi-shi, Kanagawa 243-0014 (JP); MIYOSHI, Hironori, Atsugi-shi, Kanagawa 243-0014 (JP); OGAWA, Yoshimi, Atsugi-shi, Kanagawa 243-0014 (JP); KUMAGAI, Yoshihiro, Atsugi-shi, Kanagawa 243-0014 (JP); ANDO, Hideki, Atsugi-shi, Kanagawa 243-0014 (JP); WATANABE, Satoshi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2021/032556
(87) International publication number: WO 2022/070781

(57) **Abstract**

Functions can be flexibly changed according to various use cases. An information processing system according to an embodiment includes a sensor data acquisition unit that acquires sensing data acquired by a sensor, a processing unit including an inference unit that executes inference using the sensing data as an input, and a switching unit that switches the inference unit according to a use case.

## Description

### Field

The present disclosure relates to an information processing system and an information processing method.

### Background

For example, it is conceivable to construct a monitoring system using a plurality of sensor devices, such as construction of a monitoring system that arranges monitoring cameras at various places in a town and performs monitoring using images.

However, conventionally, in this type of monitoring system, sensing data acquired by the sensor devices such as the cameras is assumed to be used only by an individual user who has installed the sensor devices, and it has been difficult for other users to easily use the sensing data from a viewpoint of ensuring security and due to no common interface.

Therefore, Patent Literature 1 below proposes a system constructing a framework in which various users can easily use information obtained from sensing data acquired by various sensor devices.

Specifically, in Patent Literature 1, the sensor devices with different specifications and the user devices with different specifications can be used in the framework by providing a common interface related to a transfer of the sensing data. In addition, Patent Literature 1 discloses that a load related to data transfer is reduced by not continuously sending the sensing data from the sensor devices to the user devices but sending data to the user device side only when a condition requested from the user device side is satisfied (e.g., when a condition that a specific person appears in a monitoring image is satisfied, only a data portion in which the person appears is transmitted).

Here, a specification called Network of Intelligent Camera Ecosystem (NICE) are formulated in order to realize a system that enables the use of sensor devices with different specifications and user devices with different specifications in the framework and reduces the load related to data transfer by transmitting data to the user device side only when a predetermined condition is satisfied, as in the system disclosed in Patent Literature 1.

As the NICE specification, NICE Data Pipeline Specification v1.0.1 (10.8.2.JSON Object) defines a transmission data format that the sensor device uses for transmitting sensing data ("SceneData ") when a predetermined condition is satisfied. Specifically, in this format, it is specified to transmit "SceneData" as an actual data portion in the sensing data and data called "SceneMark" that is an additional data portion of "SceneData" and includes information on "SceneDataType" indicating a type of "SceneData".

### Citation List

### Patent Literature

Patent Literature 1: WO 2020/100922 A
Patent Literature 2: JP 2020-129390 A
Patent Literature 3: JP 2020-123379 A

### Summary

### Technical Problem

However, the current NICE specification has not defined a specific mechanism for replacing or updating a model incorporated in advance as an inference unit on a device side. As a result, the use of the device to which the model has been introduced is limited, and there is a problem that it is difficult to flexibly change a function provided to the user according to various use cases.

Therefore, the present disclosure proposes an information processing system and an information processing method capable of flexibly changing functions according to various use cases.

### Solution to Problem

To solve the problems described above, an information processing system according to an embodiment of the present disclosure includes: a sensor data acquisition unit that acquires sensing data acquired by a sensor; a processing unit including an inference unit that executes inference using the sensing data as an input; and a switching unit that switches the inference unit according to a use case.

### Brief Description of Drawings

FIG. 1 is a system diagram illustrating a schematic functional configuration of an information processing system according to a first embodiment.
FIG. 2 is a block diagram illustrating a functional configuration example of a sensor device 10 according to the first embodiment.
FIG. 3 is a block diagram illustrating a functional configuration example of a service server 20 according to the first embodiment.
FIG. 4 is a block diagram illustrating a functional configuration example of an aggregation server 50 according to the first embodiment.
FIG. 5 is an explanatory diagram illustrating a generation example of a recognition model 610 according to the first embodiment.
FIG. 6 is a sequence diagram illustrating an example of an information processing method according to the first embodiment.
FIG. 7 is a block diagram illustrating a schematic example of a system architecture that enables download of an AI model to a device in the information processing system according to the first embodiment.
FIG. 8 is a block diagram illustrating a schematic example of a node architecture of a device according to the first embodiment.
FIG. 9 is a schematic diagram illustrating an overview of an overall operation of the information processing system according to the first embodiment.
FIG. 10 is a sequence diagram illustrating an example of a basic operation sequence according to the first embodiment.
FIG. 11 is a diagram illustrating an example of a SceneMode object according to the first embodiment.
FIG. 12 is a diagram illustrating an example of RefDataList according to the first embodiment.
FIG. 13 is a diagram illustrating an example of RefData according to the first embodiment.
FIG. 14 is a diagram illustrating an example of Processing Stage according to the first embodiment.
FIG. 15 is a diagram illustrating an example of a StartScene object according to the first embodiment.
FIG. 16 is a diagram illustrating an example of model data in reference data according to the first embodiment.
FIG. 17 is a sequence diagram illustrating an example of an operation sequence when an AI model preset is used according to the first embodiment.
FIG. 18 is a sequence diagram illustrating an example of an operation sequence when the AI model is downloaded according to the first embodiment.
FIG. 19 is a block diagram illustrating a schematic example of a node architecture of a device according to a modified example of the first embodiment.
FIG. 20 is a sequence diagram illustrating an example of an operation sequence when an AI model is downloaded according to the modified example of the first embodiment.
FIG. 21 is a diagram illustrating an example of an Encryption object according to a second embodiment.
FIG. 22 is a diagram illustrating an example of a Privacy object according to the second embodiment.
FIG. 23 is a sequence diagram illustrating an example of an operation sequence according to the second embodiment.
FIG. 24 is a block diagram illustrating an implementation example of an information processing system according to a third embodiment.
FIG. 25 is a hardware configuration diagram illustrating an example of a computer that implements a function of an information processing apparatus according to the present disclosure.

### Description of Embodiments

Hereinafter, embodiments of the present disclosure will be described with reference to the drawings. In the following embodiments, same parts are given the same reference signs to omit redundant description.

The present disclosure will be described according to the following item order.
0. Introduction
1. First embodiment
1.1 Schematic configuration of information processing system
1.2 Detailed configuration of sensor device
1.3 Detailed configuration of service server
1.4 Detailed configuration of aggregation server
1.5 Recognition according to present embodiment
1.6 Information processing method
1.7 System architecture enabling download of AI model
1.8 Node architecture in device
1.9 Overall operation outline
1.10 Basic operation sequence
1.11 Example of SceneMode object
1.12 Example of StartScene object
1.13 Example of model data
1.14 Operation sequence example when using preset AI model
1.15 Operation sequence example when AI model is downloaded and used
1.16 Modified example
1.17 Other modified examples
1.18 Summary
2. Second embodiment
2.1 Example of Encryption object
2.2 Example of Privacy object
2.3 Operation sequence example when model data is encrypted
2.4 Summary
3. Third embodiment
3.1 Implementation example
3.2 Operation example
4. Hardware configuration

### 0. Introduction

As described above, in a device in which a model for executing authentication or inference is incorporated in advance, it is difficult to replace the model already implemented. Therefore, since only a certain result can be obtained from the device in which the model has already been incorporated and the application thereof is limited, it is difficult to flexibly change a function provided to a user according to various use cases. In addition, in order to replace the function, it is necessary to update firmware or the like, and it is difficult to timely realize an appropriate function according to a scene, a service, or the like required by the user or the like.

Therefore, the following embodiments propose an information processing system and an information processing method capable of replacing a function in a timely manner according to a use case. Since various detections, analyses, and the like can be performed by enabling switching of functions, it is possible to switch functions with a high degree of freedom according to the use case.

In addition, the following embodiments enable to replace the function in a secure state. As a result, an information processing apparatus can be protected from information leakage, falsification, and the like, and thus, it is possible to further reliably provide the user with a function according to the use case.

For example, in the following embodiments, a device that executes AI processing such as machine learning can freely acquire and implement an AI model, a parameter, or the like for executing the AI processing from an application, a server, or another device while maintaining a secure state. This makes it possible to provide a mechanism capable of immediately executing an arbitrary AI processing when necessary. Note that the device may be equipped with, for example, various sensors such as a camera, a microphone, a thermometer, and a barometer, or may have a capability of receiving information obtained from the sensors from another device or the like, executing the AI processing on data acquired thereby, and transmitting a processing result to an application, a server, or another device.

By providing this mechanism, the function of the device can be freely added or switched according to not only the use case or situation but also data or the like required by the application, the server, or another device. As a result, it is also possible to cooperate with the AI processing or the like on a side of application, server, or other device in accordance with the use case, situation, or the like, and to provide a target service to the user in an optimum form as the entire system.

Furthermore, when relearning of the AI model or the like is performed, the AI model after relearning can be easily relocated to each device.

### 1. First embodiment

Hereinafter, an information processing system and an information processing method according to a first embodiment of the present disclosure will be described in detail with reference to the drawings.

### 1.1 Schematic configuration of information processing system

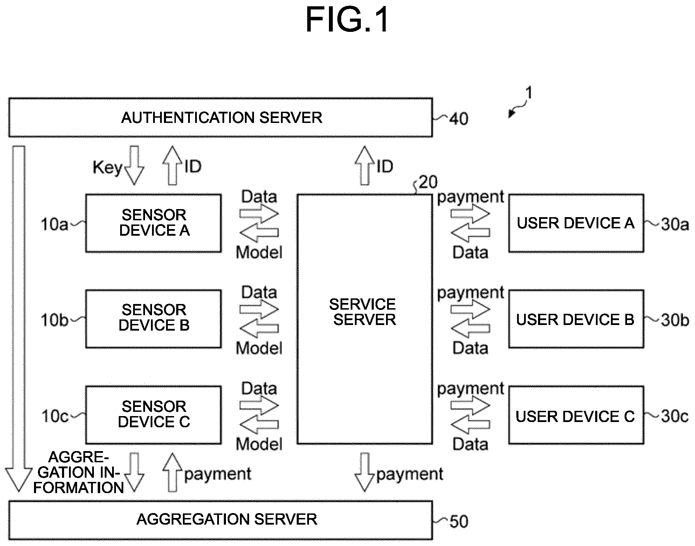

First, a configuration example of the information processing system according to the present embodiment will be described with reference to FIG. 1. FIG. 1 is a system diagram illustrating a schematic functional configuration of the information processing system according to the present embodiment.

As illustrated in FIG. 1, an information processing system 1 according to the present embodiment can mainly include a plurality of sensor devices 10a, 10b, and 10c, a service server 20, a plurality of user devices 30a, 30b, and 30c, an authentication server 40, and an aggregation server 50. For example, each of these devices is connected to a network (not illustrated) via a base station (not illustrated) or the like (e.g., a base station of a mobile phone and an access point of a wireless local area network (LAN)), thereby constructing the information processing system 1. Note that, as a communication system used in the network, any method can be applied regardless of wired or wireless (e.g., a fifth generation communication system, WiFi (registered trademark), and Bluetooth (registered trademark)), but it is desirable to use a communication system capable of stably transmitting a large volume of data at a high speed. Furthermore, the number of sensor devices 10 and the number of user devices (request sources) 30 included in the information processing system 1 are not limited to three as illustrated in FIG. 1, and three or more sensor devices and three or more user devices may be included in the information processing system 1 according to the present embodiment. In other words, the information processing system 1 according to the present embodiment can manage the plurality of sensor devices 10, receive requests from the plurality of user devices 30, and transmit data to the user devices 30. Hereinafter, an outline of each device included in the information processing system 1 according to the present embodiment will be described.

### (Sensor device 10)

A sensor device 10 can acquire sensing data (e.g., an image and sound) of a surrounding environment where the sensor device 10 is installed, and transmit distribution data (predetermined data) acquired from the acquired sensing data to an external device such as a user device 30. Furthermore, the sensor device 10 desirably has an AI function, and can recognize whether or not the acquired sensing data corresponds to a request (distribution request) from the user based on a machine learning model (hereinafter referred to as an AI model) transmitted from the service server 20. Note that, in the present description, a recognition model that executes a recognition process on data is exemplified as the AI model, but the AI model is not limited thereto, and various AI models learned for various purposes may be applied.

For example, the sensor device 10 can be an imaging device (camera) mounted on a moving body such as an automobile, an imaging device mounted on a smartphone carried by the user, or an imaging device such as a monitoring camera installed in a home, a store, or the like. In this case, the sensing data is an image. These imaging devices can acquire the image by collecting light from a subject around where the imaging devices are installed, forming a light image on an imaging surface, and converting the light image formed on the imaging surface into an electrical image signal. In the following description, unless otherwise specified, the moving body can be an automobile, an electric vehicle, a hybrid electric vehicle, a motorcycle, a bicycle, a personal mobility, an airplane, a drone, a ship, a robot (mobile robot), a construction machine, an agricultural machine (tractor), or the like.

Furthermore, in the present embodiment, the sensor device 10 is not limited to the above-described imaging devices. In the present embodiment, for example, the sensor device 10 may be a depth sensor that measures a distance (depth) to the subject, a sound collecting device such as a microphone that collects sound of a surrounding environment, a temperature sensor and a humidity sensor that measure temperature and humidity of the surrounding environment, and a water level sensor that measures a water level of a river or the like.

Note that, in the present embodiment, an internal configuration of the sensor device 10 is not basically limited as long as the sensor device 10 has an interface (e.g., data transfer format and data transfer method) common to the information processing system 1. Therefore, the information processing system 1 according to the present embodiment can incorporate various sensor devices 10 having different specifications. Note that a detailed configuration of the sensor device 10 will be described later.

### (Service server 20)

The service server 20 is a computer that accepts, from the user device 30, a distribution request for requesting distribution of distribution data that can be generated from the sensing data. Furthermore, the service server 20 can integrate a plurality of distribution requests (requests), generate a recognition model according to the distribution requests, and transmit the generated recognition model to the sensor device 10 described above. Furthermore, the service server 20 can receive the distribution data from the sensor device 10 and transmit the received distribution data to the user device 30 corresponding to the distribution request as necessary. The service server 20 is realized by hardware such as a central processing unit (CPU), a read only memory (ROM), and a random access memory (RAM). Note that a detailed configuration of the service server 20 will be described later.

### (User device 30)

The user device 30 is a terminal that is carried by the user or installed near the user, can receive information input by the user, can transmit the received information to the service server 20 as the distribution request, and can receive the distribution data related to the distribution request. For example, the user device 30 may be a mobile terminal such as a tablet personal computer (PC), a smartphone, a smart watch, a mobile phone, a laptop PC, and a notebook PC, or a wearable device such as a head mounted display (HMD). Furthermore, the user device 30 may be an electronic control unit (ECU) mounted on a vehicle, or a controller that remotely controls a drone, a robot, or the like. Furthermore, the user device 30 may include a display unit (not illustrated) that performs display toward the user, an operation unit (not illustrated) that accepts an operation by the user, or a speaker (not illustrated) that performs voice output toward the user.

Note that, in the user device 30, for example, an application common to the information processing system 1 or an application having a specification common to the service server 20 described above can be installed. When the above-described application is installed, the user device 30 can generate and transmit the distribution request having the format or the like common to the information processing system 1, and receive the distribution data.

Note that, in the present embodiment, the user is assumed to be not only an individual but also the following persons. For example, the user may be a map manufacturer, a store opening strategy planner, a road management authority, or a staff in charge of social infrastructure development. More specifically, by using the service provided in the present embodiment, the map manufacturer can create a detailed map without spending manpower, and the store opening strategy planner can easily collect information when examining to open a store. In addition, by using the above service, the road management authority can easily collect information for planning a road repair plan based on estimation of a road condition, a travelling vehicle type, and the like. Furthermore, by using the above service, the staff in charge of social infrastructure development planning can consider application to preventive measures and telematics insurance according to statistics and analysis of driving tendencies and accident causes.

Then, the user transmits the distribution request to the service server 20 via the user device 30. The distribution request includes information specifying data content (data type) or the like that the user requests distribution. For example, the distribution request can include object information on an object (e.g., face, person, animal, moving object, text, road (sidewalk, crosswalk, road width, or sign), logo and barcode) that is a target for which distribution is requested, and information (data type) specifying what kind of information (e.g., quantity, speed, position, state, age, sex, identified name, and estimation result) on the object is requested. Furthermore, the distribution request can include data format information specifying a data format (e.g., image and text) of the distribution data. Further, the distribution request can include identification information (ID) of the user or the user device 30. Note that, in the present embodiment, the distribution request may include various types of data that the service server 20 uses for generating the recognition model.

In the present embodiment, the above distribution request has the data format common to the information processing system 1. For example, in the present embodiment, the distribution request may include a character string or a numerical string corresponding to the object information or the data format information. In this case, for the object information and the data format information requested by the user at a high frequency, a corresponding character string or numeric string is determined in advance, and is stored in a storage unit (not illustrated) held by the service server 20 as a database (not illustrated). Then, the service server 20 can recognize the object information and the data format information corresponding to the character string or the like included in the distribution request by referring to the database. Furthermore, when the character string or the like corresponding to the object information and the data format information desired by the user does not exist in the database, the object information and the data format information may be directly described in the distribution request. Alternatively, in this case, a character string corresponding to the object information and the data format information desired by the user may be newly determined, and the determined character string or the like may be described in the distribution request and the database.

### (Authentication server 40)

The authentication server 40 is a computer that receives authentication information (ID) from each of the sensor device 10 and the service server 20, and determines whether or not each of these devices has authority to provide or receive a service by the information processing system 1 according to the present embodiment. Further, the authentication server 40 transmits a key that enables access to the service, a command for providing the service or being provided with the service, or the like to an authorized device. The authentication information has a data format common to the information processing system 1. In other words, the authentication server 40 is used as an authentication application programming interface (API), and can authenticate the sensor device 10 and the service server 20 and associate them with each other. By incorporating this authentication server 40, the information processing system 1 according to the present embodiment can ensure security of the information processing system 1 and associate each sensor device 10 with each user device 30 via the service server 20. Furthermore, the authentication server 40 can be realized by hardware such as a CPU, a ROM, and a RAM, and can cooperate with the aggregation server 50. Note that, in the present embodiment, the authentication server 40 may perform authentication on the user device 30.

### (Aggregation server 50)

The aggregation server 50 is a computer that, in cooperation with the authentication server 40 described above, aggregates a distribution amount of the distribution data for each user or user device 30 and for each sensor device 10, and determines a data usage fee based on the aggregation or the like. Furthermore, the aggregation server 50 can transfer the data usage fee between an administrator of the sensor device 10 and each user via the service server 20. For example, the aggregation server 50 can be realized by hardware such as a CPU, a ROM, and a RAM.

Note that, in the information processing system 1 according to the present embodiment, each of the sensor device 10 and the service server 20 may not be realized by a single device, and may be realized by a plurality of devices connected via various wired or wireless networks (not illustrated) to cooperate with each other. Furthermore, in the present embodiment, two or all of the service server 20, the authentication server 40, and the aggregation server 50 may be realized by an integrated device. Furthermore, the information processing system 1 according to the present embodiment may include another server (not illustrated).

### 1.2 Detailed configuration of sensor device

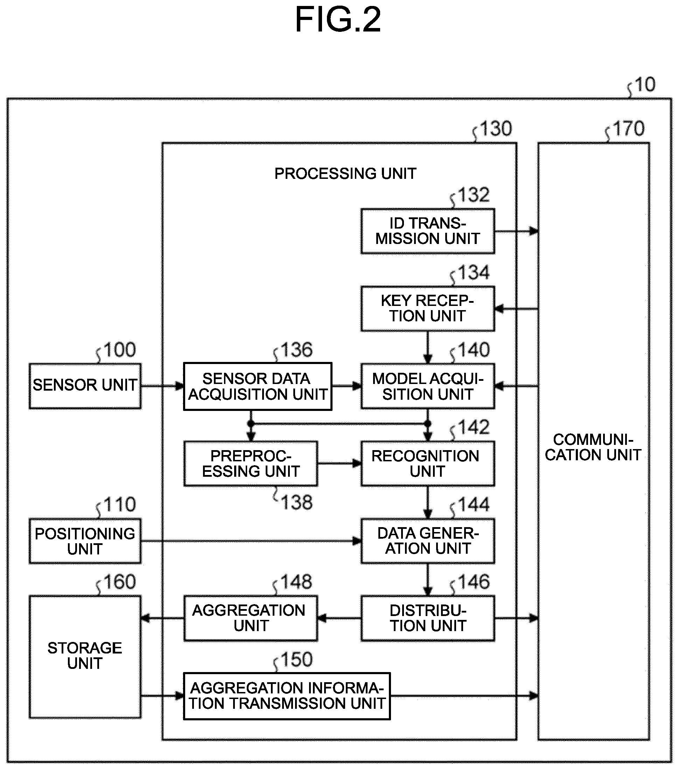

Next, the detailed configuration of the sensor device 10 according to the present embodiment will be described with reference to FIG. 2. FIG. 2 is a block diagram illustrating a functional configuration example of the sensor device 10 according to the present embodiment. Specifically, as illustrated in FIG. 2, the sensor device 10 mainly includes a sensor unit 100, a positioning unit 110, a processing unit 130, a storage unit 160, and a communication unit 170. Hereinafter, each functional block of the sensor device 10 will be sequentially described.

### (Sensor unit 100)

The sensor unit 100 acquires the sensing data and outputs the acquired sensing data to the processing unit 130. Specifically, when the sensor device 10 is an imaging device, the sensor unit 100 includes an imaging optical system such as an imaging lens and a zoom lens that collect light emitted from a subject, and an imaging element such as a cherge coupled device (CCD) or a complementary metal oxide semoconductor (CMOS). Note that, in the present embodiment, the sensor unit 100 may be provided so as to be fixed in the sensor device 10, or may be detachably provided on the sensor device 10.

Furthermore, in the present embodiment, the sensor unit 100 may include a time of flight (TOF) sensor (not illustrated) as a depth sensor in addition to the imaging device. The TOF sensor can acquire shape information (depth information/image) such as a distance between the TOF sensor and the subject and unevenness by directly or indirectly measuring a return time of reflected light from the subject. Furthermore, in the present embodiment, the sensor unit 100 may include a sound collecting device (microphone), a temperature sensor, an atmospheric pressure sensor, a humidity sensor, a wind direction/wind speed sensor, a sunshine sensor, a rainfall sensor, a water level sensor, and the like, and is not particularly limited as long as the sensing data can be acquired from the surrounding environment.

### (Positioning unit 110)

The positioning unit 110 acquires positioning data of the sensor device 10 when the sensing data corresponding to the distribution request is acquired, and outputs the acquired positioning data to the processing unit 130 (specifically, to a data generation unit 144). For example, the positioning data is transmitted to the user device 30 by a distribution unit 146 of the processing unit 130 together with the distribution data. Specifically, the positioning unit 110 can be a global navigation satellite system (GNSS) receiver. In this case, the positioning unit 110 can generate positioning data indicating a latitude and longitude of a current location of the sensor device 10 based on a signal from a GNSS satellite. In addition, in the present embodiment, since it is possible to detect a relative positional relationship of the user based on information from, for example, radio frequency identification (RFID), a Wi-Fi access point, or a radio base station, it is also possible to use these communication devices as the above positioning unit 110. Note that, in the present embodiment, the positioning unit 110 may not be provided in the sensor device 10.

### (Processing unit 130)

The processing unit 130 has a function of processing the sensing data acquired by the sensor unit 100 and generating the distribution data. Furthermore, the processing unit 130 aggregates a distribution amount of distribution data distributed and transmits aggregation information to the aggregation server 50. The processing unit 130 is realized by, for example, a processing circuit such as a CPU or a graphics processing unit (GPU), a ROM, a RAM, and the like. Specifically, as illustrated in FIG. 2, the processing unit 130 mainly includes an ID transmission unit 132, a key reception unit 134, a sensor data acquisition unit 136, a preprocessing unit 138, a model acquisition unit 140, a recognition unit 142, the data generation unit 144, the distribution unit 146, an aggregation unit 148, and an aggregation information transmission unit 150. Hereinafter, details of each functional unit included in the processing unit 130 will be described.

### ID transmission unit 132

The ID transmission unit 132 transmits the authentication information (ID) of the sensor device 10 to the authentication server 40 via the communication unit 170. The authentication information is used when the authentication server 40 determines whether or not the sensor device 10 has authority to provide a service by the information processing system 1 according to the present embodiment. The information processing system 1 according to the present embodiment ensures security of the information processing system 1 by the authentication.

### Key reception unit 134

The key reception unit 134 receives a key that enables access to the service, a command for providing the service, or the like transmitted from the authentication server 40 via the communication unit 170, and outputs the received key or the like to the model acquisition unit 140. The model acquisition unit 140 can acquire the recognition model from the service server 20 using the key or the like received by the key reception unit 134.

### Sensor data acquisition unit 136

The sensor data acquisition unit 136 controls the sensor unit 100 to acquire the sensing data output from the sensor unit 100, and outputs the acquired sensing data to the preprocessing unit 138 or the recognition unit 142.

### Preprocessing unit 138

The preprocessing unit 138 preprocesses the sensing data output from the sensor data acquisition unit 136 according to information (e.g., information related to supervised data used in generating the recognition model) included in the recognition model acquired by the model acquisition unit 140, and outputs the preprocessed sensing data to the recognition unit 142. Specifically, the recognition unit 142 recognizes whether the sensing data corresponds to the distribution request by using the recognition model corresponding to the distribution request obtained by machine learning. Therefore, in the present embodiment, the sensing data suitable for the recognition can be provided to the recognition unit 142 by performing preprocessing so that the sensing data has a form close to the recognition model. As a result, according to the present embodiment, a recognition accuracy of the recognition unit 142 can be improved.

### Model acquisition unit 140

The model acquisition unit 140 acquires the recognition model corresponding to the distribution request from the service server 20 via the communication unit 170, and outputs the acquired recognition model to the preprocessing unit 138 and the recognition unit 142.

### Recognition unit 142

The recognition unit 142 uses the AI function or the like to recognize, based on the recognition model output from the model acquisition unit 140, whether the sensing data output from the sensor data acquisition unit 136 or the sensing data preprocessed by the preprocessing unit 138 corresponds to the distribution request. More specifically, for example, the recognition unit 142 can recognize whether or not an image of an object designated by the distribution request is included in an image as the sensing data (e.g., object recognition). Then, the recognition unit 142 outputs the recognition result to the data generation unit 144. Note that the recognition model is obtained by machine learning in the service server 20, and can be, for example, feature information that characterizes the object designated by the distribution request or obtained from data such as an image or a voice of the object. In the present embodiment, since the above-described recognition is performed by the sensor device 10, the recognition can be performed immediately after acquisition of the sensing data.

### Data generation unit 144

When the recognition unit 142 recognizes that the sensing data corresponds to the distribution request, the data generation unit 144 can generate the distribution data by performing processing corresponding to the distribution request on the sensing data. For example, the data generation unit 144 can generate the distribution data, from the sensing data, by extracting only data related to the object designated by the distribution request, abstracting the data, or converting the data into text data. More specifically, the distribution data can include at least one of attribute information, quantity information, position information, state information, operation information, surrounding environment information, and prediction information of the object designated by the distribution request. Furthermore, in the present embodiment, the data format of the distribution data may be image data, audio data, text data, or the like, and is not particularly limited. As described above, in the present embodiment, since the sensor device 10 processes the sensing data corresponding to the distribution request and generates the distribution data, the distribution can be realized in real time. Furthermore, in the present embodiment, when the sensing data does not correspond to the distribution request, the data generation unit 144 does not generate and distribute the distribution data. Therefore, according to the present embodiment, a data transmission load can be reduced as compared with a case where the sensing data is transmitted regardless of whether or not the sensing data corresponds to the distribution request.

Furthermore, in the present embodiment, for example, the data generation unit 144 can exclude information regarding privacy included in the sensing data (e.g., an image of a person to the extent that the person can be identified) from the distribution data. Furthermore, for example, the data generation unit 144 can mask the information regarding privacy in the distribution data. In this way, in the present embodiment, the privacy is protected.

### Distribution unit 146

The distribution unit 146 distributes the distribution data generated by the data generation unit 144 described above to the user device 30 or the service server 20. Note that the distribution unit 146 can also distribute a plurality of different pieces of distribution data to the user device 30 or the service server 20. Further, the distribution unit 146 outputs information such as a distribution amount of the distribution data distributed to the aggregation unit 148. For example, the distribution unit 146 outputs, as the above information, information on a date and time when the sensing data corresponding to the distribution data is acquired, information on a date and time when the distribution data is distributed, a data type, a data format, a distribution amount, and a distribution destination (e.g., recognition information of the user device 30).

### Aggregation unit 148

The aggregation unit 148 generates, for example, aggregation information obtained by aggregating the distribution amount of the distribution data for each user or each user device 30, and outputs the aggregation information to the storage unit 160.

### Aggregation information transmission unit 150

The aggregation information transmission unit 150 acquires the aggregation information from the storage unit 160 at a predetermined timing (e.g., every month), and transmits the acquired aggregation information to the aggregation server 50. As the aggregation information, the aggregation information transmission unit 150 transmits, for example, information on the date and time when the sensing data corresponding to the distribution data is acquired, information on the date and time when the distribution data is distributed, the data type, the data format, the distribution amount, the distribution destination (e.g., recognition information of the user device 30), the identification information of the sensor device 10, and the information on the administrator of the sensor device 10.

### (Storage unit 160)

The storage unit 160 stores programs, information, and the like for the processing unit 130 to execute various types of processing, and information obtained by the processing. For example, the storage unit 160 stores the aggregation information generated by the aggregation unit 148 described above. Note that the storage unit 160 is realized by, for example, a storage device such as a hard disk drive (HDD).

### (Communication unit 170)

The communication unit 170 can transmit and receive information to and from an external device such as the service server 20. In other words, the communication unit 170 is a communication interface having a function of transmitting and receiving data. Note that the communication unit 170 is realized by a communication device (not illustrated) such as a communication antenna, a transmission/reception circuit, a port, or the like.

### 1.3 Detailed configuration of service server

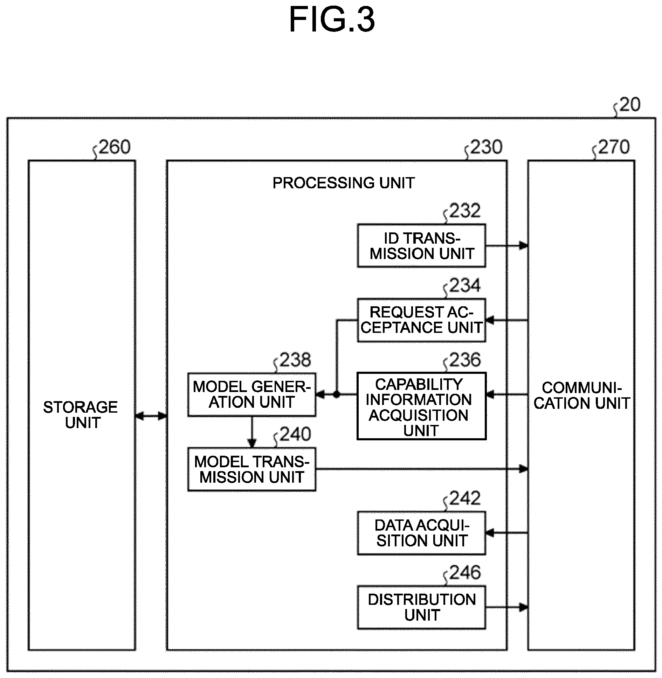

Next, the detailed configuration of the service server 20 according to the present embodiment will be described with reference to FIG. 3. FIG. 3 is a block diagram illustrating a functional configuration example of the service server 20 according to the present embodiment. Specifically, as illustrated in FIG. 3, the service server 20 mainly includes a processing unit 230, a storage unit 260, and a communication unit 270. Hereinafter, each functional block of the service server 20 will be sequentially described.

### (Processing unit 230)

The processing unit 230 has a function of acquiring the distribution request from the user device 30 via the communication unit 270, generating the recognition model according to the acquired distribution request, and transmitting the generated recognition model to the sensor device 10. The processing unit 230 is realized by, for example, a processing circuit such as a CPU or a GPU, a ROM, a RAM, and the like. Specifically, as illustrated in FIG. 3, the processing unit 230 mainly includes an ID transmission unit 232, a request acceptance unit 234, a capability information acquisition unit 236, a model generation unit 238, a model transmission unit 240, a data acquisition unit 242, and a distribution unit 246. Hereinafter, details of each functional unit included in the processing unit 230 will be described.

### ID transmission unit 232

The ID transmission unit 232 transmits authentication information (ID) of the service server 20 to the authentication server 40 via the communication unit 270. The authentication information is used when the authentication server 40 determines whether the service server 20 has authority to receive the service by the information processing system 1 according to the present embodiment. The information processing system 1 according to the present embodiment ensures security of the information processing system 1 by the authentication.

### Request acceptance unit 234

The request acceptance unit 234 accepts the distribution request from one or a plurality of user devices 30 via the communication unit 270, and outputs the accepted distribution request to the model generation unit 238. Note that the request acceptance unit 234 may integrate common distribution requests and output the integrated distribution request.

### Capability information acquisition unit 236

The capability information acquisition unit 236 acquires in advance capability information indicating a sensing capability (e.g., sensing type, accuracy, position, range, and grain size) and an arithmetic capability of each sensor device 10 via the communication unit 270, and outputs the acquired capability information to the model generation unit 238. In the present embodiment, the capability information acquisition unit 236 preferably reacquires the capability information when a function or the like of the sensor device 10 is updated. Then, in the present embodiment, the model generation unit 238 generates the recognition model according to the capability of each sensor device 10 based on the capability information of each sensor device 10. Therefore, according to the present embodiment, the capability information is reacquired when the function or the like of the sensor device 10 is updated, so that the recognition model can be updated according to the capability of each sensor device 10 at the present time.

### Model generation unit 238

The model generation unit 238 can generate, by machine learning, the recognition model corresponding to the distribution request according to the capability of each sensor device 10 based on the distribution request from the request acceptance unit 234 and the capability information from the capability information acquisition unit 236. Furthermore, the model generation unit 238 can output the generated recognition model to the model transmission unit 240. Note that the model generation unit 238 may acquire data necessary for machine learning from the user device 30 or another server (not illustrated). In the present embodiment, since the model generation unit 238 can generate the recognition model suitable for each sensor device 10, recognition in the sensor device 10 can be realized. Furthermore, in the present embodiment, when the function or the like of the sensor device 10 is updated, it is also possible to reacquire the capability information and regenerate the recognition model. Therefore, the recognition model can be dynamically changed to improve the recognition by the sensor device 10.

Furthermore, the model generation unit 238 may include, in the recognition model, information on data used in the machine learning of the model generation unit 238 (e.g., information on supervised data used in generating the recognition model). The information is used when the preprocessing unit 138 of the sensor device 10 performs preprocessing so that the sensing data has a form close to the recognition model. Furthermore, in order to acquire the sensing data required to generate the distribution data designated by the distribution request based on the capability information of the sensor device 10, the model generation unit 238 may include, in the recognition model, setting information regarding a setting of the sensor unit 100 of the sensor device 10. Note that, in the present embodiment, the model generation unit 238 may be provided as a device separate from the service server 20, and is not particularly limited.

### Model transmission unit 240

The model transmission unit 240 transmits the recognition model acquired from the model generation unit 238 described above to the sensor device 10 corresponding to each recognition model via the communication unit 270.

### Data acquisition unit 242

The data acquisition unit 242 acquires the distribution data corresponding to the distribution request from the sensor device 10 via the communication unit 270, and outputs the acquired distribution data to the distribution unit 246. Note that, in the present embodiment, when the distribution data is directly transmitted from the sensor device 10 to the user device 30, the data acquisition unit 242 may not be provided.

### Distribution unit 246

The distribution unit 246 distributes the distribution data acquired by the above data acquisition unit 242 to the user device 30 corresponding to the distribution request via the communication unit 270. Note that, in the present embodiment, when the distribution data is directly transmitted from the sensor device 10 to the user device 30, the distribution unit 246 may not be provided.

### (Storage unit 260)

The storage unit 260 stores programs, information, and the like for the processing unit 230 to execute various types of processing, and information obtained by the processing. Note that the storage unit 260 is realized by, for example, a storage device such as an HDD.

### (Communication unit 270)

The communication unit 270 can transmit and receive information to and from an external device such as the sensor device 10 and the user device 30. In other words, the communication unit 270 is a communication interface having a function of transmitting and receiving data. Note that the communication unit 270 is realized by a communication device (not illustrated) such as a communication antenna, a transmission/reception circuit, a port, or the like.

### 1.4 Detailed configuration of aggregation server

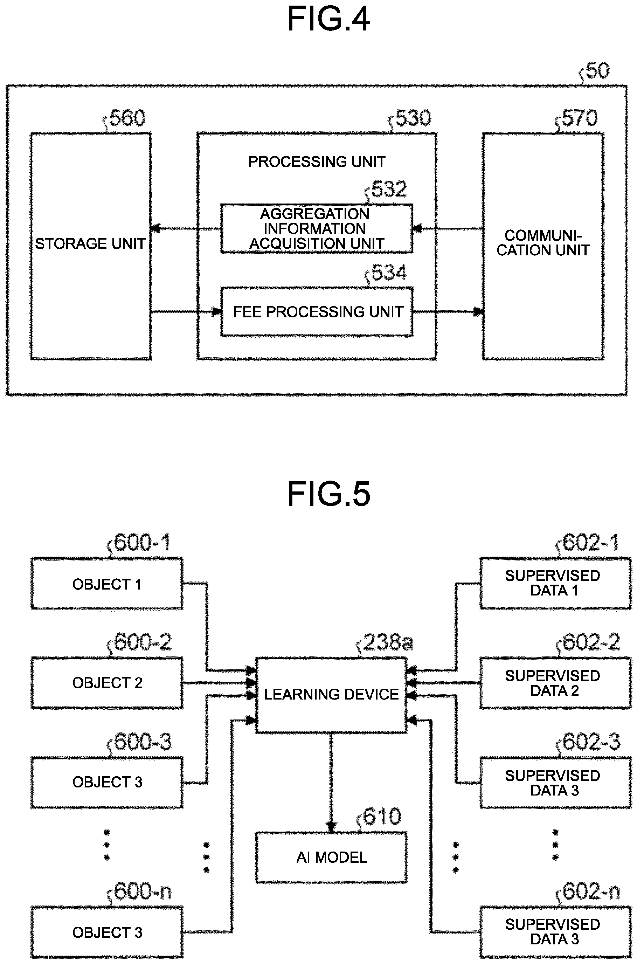

Next, a detailed configuration of the aggregation server 50 according to the present embodiment will be described with reference to FIG. 4. FIG. 4 is a block diagram illustrating a functional configuration example of the aggregation server 50 according to the present embodiment. Specifically, as illustrated in FIG. 4, the aggregation server 50 mainly includes a processing unit 530, a storage unit 560, and a communication unit 570. Hereinafter, each functional block of the aggregation server 50 will be sequentially described.

### (Processing unit 530)

The processing unit 530 has a function of processing the aggregation information and the like transmitted from the sensor device 10 and performing processing such as transfer of the data usage fee based on the aggregation information and the like. The processing unit 530 is realized by, for example, a processing circuit such as a CPU, a ROM, a RAM, and the like. Specifically, as illustrated in FIG. 4, the processing unit 530 mainly includes an aggregation information acquisition unit 532 and a fee processing unit 534. Hereinafter, details of each functional unit included in the processing unit 530 will be described.

### Aggregation information acquisition unit 532

The aggregation information acquisition unit 532 acquires the aggregation information and the like from each sensor device 10 via the communication unit 570 to be described later, and outputs the acquired aggregation information and the like to the storage unit 560 to be described later.

### Fee processing unit 534

The fee processing unit 534 determines the data usage fee based on the aggregation information and the like stored in the storage unit 560 to be described later, and can transfer the data usage fee between the aggregation server 50, the administrator of the sensor device 10, and the service server 20. Specifically, the fee processing unit 534 determines the data usage fee to be charged to the service server 20 according to the distribution amount of distribution data distributed and a fee per unit distribution amount (e.g., defined by data format) of the distribution data. Similarly, the fee processing unit 534 determines the data usage fee to be paid to each sensor device 10. In the present embodiment, since the administrator of each sensor device 10 can obtain the data usage fee, a reward for the service by the information processing system 1 according to the present embodiment can also be distributed to the administrator of each sensor device 10. By doing so, since the side providing the sensing data can also obtain a reward according to the distribution amount and a value of the distribution data in the present embodiment, it is possible to enhance motivation to provide the sensing data to the service by the information processing system 1 according to the present embodiment.

### (Storage unit 560)

The storage unit 560 stores programs, information, and the like for the processing unit 530 to execute various types of processing, and information obtained by the processing. For example, the storage unit 560 stores the aggregation information transmitted from the sensor device 10. Note that the storage unit 560 is realized by, for example, a storage device such as an HDD.

### (Communication unit 570)

The communication unit 570 can transmit and receive information to and from an external device such as the sensor device 10. In other words, the communication unit 570 is a communication interface having a function of transmitting and receiving data. Note that the communication unit 570 is realized by a communication device (not illustrated) such as a communication antenna, a transmission/reception circuit, a port, or the like.

### 1.5 Recognition according to present embodiment

Next, an example of recognition according to the present embodiment will be described with reference to FIG. 5. FIG. 5 is an explanatory diagram illustrating a generation example of a recognition model 610 according to the present embodiment.

### (Generation of recognition model)

First, generation of the model used in recognition according to the present embodiment will be described. As described above, the recognition model is generated by the model generation unit 238 of the service server 20. As illustrated in FIG. 5, the model generation unit 238 includes, for example, a supervised learning device 238a such as a support vector regression or a deep neural network. First, the learning device 238a receives, for example, a plurality of pieces of supervised data 602-1 to 602-n that are information related to an object to be requested for distribution designated by the distribution request. Then, the learning device 238a can generate the recognition model 610 used for recognition by the recognition unit 142 of the sensor device 10 by performing machine learning on the input plurality of pieces of supervised data 602-1 to 602-n. In the present embodiment, since the plurality of sensor devices 10 have different sensing capabilities and arithmetic capabilities, i.e., different recognition capabilities, the learning device 238a preferably generates the recognition model 610 according to the capability information of each sensor device 10 described above. Therefore, in the present embodiment, even when the plurality of sensor devices 10 having various specifications is included, each sensor device 10 can perform the recognition because the recognition model 610 according to the capability of each sensor device 10 can be generated.

More specifically, for example, the learning device 238a receives input of supervised data 602-1 to 602-n related to objects that are labeled with objects 600-1 to 600-n to be requested for distribution designated by the distribution request. Then, the learning device 238a extracts feature points and feature amounts of the objects from the plurality of pieces of supervised data 602-1 to 602-n by machine learning using the recurrent neural network or the like. The information such as the feature points extracted in this manner becomes the recognition model 610 for recognizing whether or not the information on the objects is included in the sensing data acquired by each sensor device 10.

Here, generation of the recognition model 610 according to the present embodiment will be described with a specific example. For example, a case of requesting a search for a predetermined person (object) using an image (sensing data) acquired by the sensor device 10 according to the distribution request from the user (the distribution data is the position information on the predetermined person) will be described. The service server 20 acquires a plurality of images of the predetermined person from the user device 30 that has transmitted the distribution request or a server (not illustrated) as a plurality of pieces of supervised data 602 used for generating the recognition model 610. Then, as illustrated in FIG. 5, the service server 20 inputs, to the learning device 238a, the plurality of images acquired (supervised data) 602-1 to 602-n labeled with predetermined persons (objects) 600-1 to 600-n, respectively Furthermore, the learning device 238a extracts feature points and feature amounts of the image of the predetermined person (object) 600 from the plurality of images (supervised data) 602-1 to 602-n by machine learning using the plurality of images (supervised data) 602-1 to 602-n, and generates the recognition model 610 for recognizing the image of the predetermined person (object) 600 from images (sensing data).

Note that, in the present embodiment, similarly to the above-described example, when it is requested to search for the predetermined person (object) using the sensing data (here, the type of sensing data is not particularly limited) acquired by the sensor device 10 according to the distribution request from the user, the learning device 238a may generate the recognition model 610 according to the type of sensing data that can be acquired by each sensor device 10. In this case, more specifically, the learning device 238a generates the recognition model 610 for recognizing an image of the predetermined person from images for the sensor device 10 capable of acquiring images, and generates the recognition model 610 for recognizing voice of the predetermined person from an environmental sound for the sensor device 10 capable of acquiring the environmental sound. Therefore, in the present embodiment, even when the plurality of sensor devices 10 having various specifications is included, each sensor device 10 can perform the recognition because the recognition model 610 according to the capability of each sensor device 10 can be generated.

Furthermore, in the present embodiment, for example, when it is requested to search for a predetermined cat (here, a cat named "TAMA" (the type is assumed to be American Short Hair)) using images acquired by the sensor device 10 according to the distribution request from the user, the learning device 238a may generate the recognition model 610 according to the capability of each sensor device 10. In this case, more specifically, the learning device 238a generates the recognition model 610 for recognizing the image of "TAMA" from images for the sensor device 10 having a sensing capability of acquiring a high resolution image and having a high arithmetic capability. Furthermore, the learning device 238a generates the recognition model 610 for recognizing the image of the American Short Hair (cat species) from images for the sensor device 10 having the sensing capability of acquiring a medium solution image and having the high arithmetic capability. Furthermore, the learning device 238a generates the recognition model 610 for recognizing the cat image from images for the sensor device 10 having the sensing capability of acquiring a low resolution image and having a low arithmetic capability. Therefore, in the present embodiment, even when the plurality of sensor devices 10 having various specifications is included, each sensor device 10 can perform the recognition because the recognition model 610 according to the capability of each sensor device 10 can be generated.

Furthermore, in the present embodiment, as described above, the recognition model 610 may include information regarding the supervised data 602 used in the machine learning. Here, the information regarding the supervised data 602 can be a type of the supervised data 602 (e.g., image and sound) or a quality of the supervised data (e.g., distortion compensation level, pixel defect, white balance, image size, saturation, luminance, gamma, contrast, edge enhancement level, focus, exposure level, resolution, dynamic range, and noise reduction level). Such information regarding the supervised data 602 can be used when the preprocessing unit 138 of the sensor device 10 described above performs preprocessing so that the acquired sensing data has a form close to the recognition model (specifically, the supervised data 602). By doing so, in the present embodiment, an accuracy of the recognition by the recognition unit 142 of the sensor device 10 can be improved. Details thereof will be described later.

Furthermore, in the present embodiment, as described above, the recognition model 610 may include setting information regarding the setting of the sensor unit 100 of the sensor device 10 for acquiring sensing data required to generate the distribution data designated by the distribution request. Here, the setting information can be a type (e.g., image and sound) of sensing data or a setting value of the sensor unit 100 according to a desired quality of the sensing data (e.g., distortion compensation level, white balance, image size, saturation, luminance, gamma, contrast, edge enhancement level, focus, exposure level, resolution, dynamic range, and noise reduction level). In the present embodiment, this setting information is used at the time of setting the sensor unit 100, and it is possible to acquire the sensing data according to the recognition model 610, and eventually, the recognition accuracy of the recognition unit 142 can be improved.

Note that, in the present embodiment, the learning device 238a may be provided in a server separate from the service server 20, and is not particularly limited. Furthermore, in the present embodiment, the learning method in the learning device 238a is not limited to the above-described method, and another method may be used.

### (Recognition using recognition model)

Next, the recognition using the above-described recognition model 610 will be described. As described above, the recognition model 610 is used when the recognition unit 142 of the sensor device 10 recognizes whether the sensing data or the pre-processed sensing data corresponds to the distribution request. Here, the recognition according to the present embodiment will be described with a specific example. For example, a case of requesting a search for a predetermined person (object) using images (sensing data) acquired by the sensor device 10 according to the distribution request from the user (the distribution data is the position information of a predetermined person) will be described. The sensor device 10 acquires an image from the sensor unit 100. Then, the recognition unit 142 refers to the recognition model 610 acquired from the service server 20, specifically the feature point and the feature amount of the image of the predetermined person (object) 600, and recognizes whether or not the image of the predetermined person is included in the image acquired from the sensor unit 100. In other words, in the present embodiment, since the above-described recognition is performed by the sensor device 10, the recognition can be performed immediately after acquiring the image.

In the present embodiment, as described above, since the plurality of sensor devices 10 have different sensing capabilities and arithmetic capabilities, i.e., different recognition capabilities, the recognition model 610 is generated according to the capability information of each sensor device 10 for performing the recognition. For example, in the present embodiment, when it is requested to search for the predetermined person (object) using the sensing data (here, the type of sensing data is not particularly limited) acquired by the sensor device 10 according to the distribution request from the user, the recognition unit 142 of the sensor device 10 capable of acquiring images recognizes an image of the predetermined person from the images based on the recognition model 610, and the recognition unit 142 of the sensor device 10 capable of acquiring the environmental sound recognizes a voice of the predetermined person from the environmental sound based on the recognition model 610.

Furthermore, in another example, in the present embodiment, when it is requested to search for a predetermined cat (here, a cat named "TAMA" (the type is assumed to be American Short Hair)) using images acquired by the sensor device 10 according to the distribution request from the user, the recognition may be performed as follows. The recognition unit 142 of the sensor device 10 having a sensing capability of acquiring a high resolution image and a high arithmetic capability recognizes an image of "TAMA" from images based on the recognition model 610. Furthermore, the recognition unit 142 of the sensor device 10 having the sensing capability of acquiring a medium resolution image and a high arithmetic capability recognizes the image of American Short Hair (cat species) from the images based on the recognition model 610. Furthermore, the recognition unit 142 of the sensor device 10 having a sensing capability of acquiring a low resolution image and a low arithmetic capability recognizes a cat image from the images based on the recognition model 610. As described above, in the present embodiment, even when a plurality of sensor devices 10 having various specifications is included, each sensor device 10 can perform the recognition.

Note that, in the present embodiment, the recognition unit 142 may be provided in an apparatus separate from the sensor device 10, and is not particularly limited. Furthermore, in the present embodiment, the recognition method in the recognition unit 142 is not limited to the above-described method, and another method may be used.

### 1.6 Information processing method

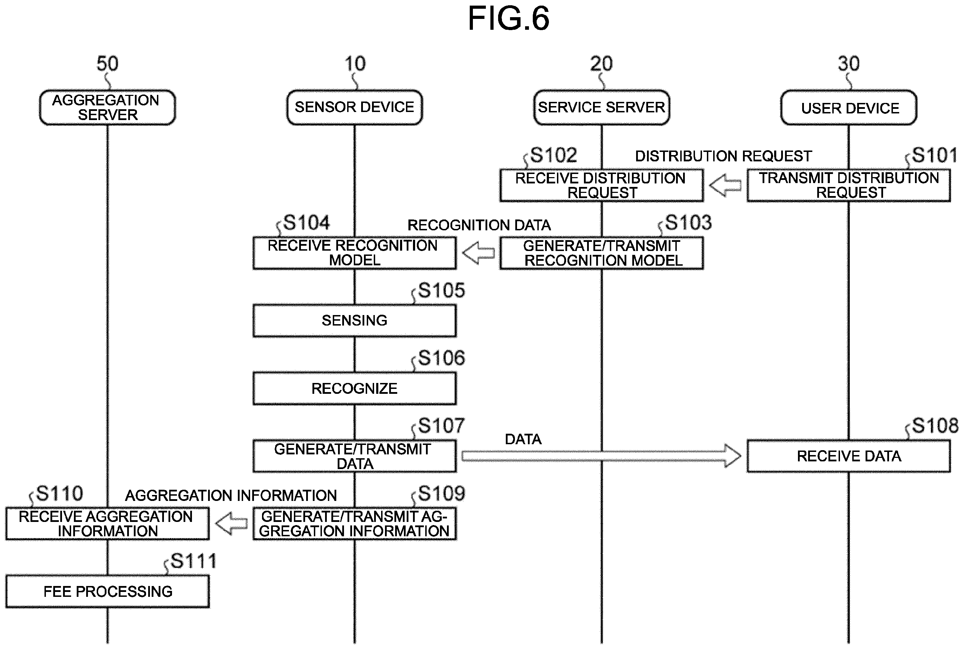

Next, the information processing method according to the embodiment of the present disclosure will be described with reference to FIG. 6. FIG. 6 is a sequence diagram illustrating an example of the information processing method according to the present embodiment. As illustrated in FIG. 6, the information processing method according to the present embodiment can mainly include a plurality of steps from Step S101 to Step Sill. Details of these steps of the information processing method according to the present embodiment will be described below.

First, the user device 30 receives information input from the user, and transmits the received information to the service server 20 as the distribution request (Step S101).

Next, the service server 20 receives the distribution request from the user device 30 (Step S102). Then, the service server 20 generates the recognition model based on the distribution request received in Step S102 described above, and transmits the generated recognition model to each sensor device 10 (Step S103).

Next, the sensor device 10 receives the recognition model from the service server 20 (Step S104). Furthermore, the sensor device 10 performs sensing and acquires the sensing data (Step S105). Furthermore, the sensor device 10 recognizes whether or not the sensing data acquired in Step S105 corresponds to the distribution request based on the recognition model received in Step S104 described above (Step S106). Then, the sensor device 10 performs processing corresponding to the distribution request on the sensing data based on the recognition that the sensing data corresponds to the distribution request in Step S106 described above, and generates the distribution data. Further, the sensor device 10 directly transmits the generated distribution data to the user device 30 related to the distribution request (Step S107).

Next, the user device 30 receives the distribution data transmitted from the sensor device 10 (Step S108). In the present embodiment, since the distribution data can be directly transmitted from the sensor device 10 to the user device 30, a processing load of the service server 20 can be reduced, and an increase in an operation cost of the service server 20 can be avoided.

Further, the sensor device 10 generates the aggregation information based on the distribution of the distribution data in Step S107 described above, and transmits the generated aggregation information to the aggregation server 50 (Step S109).

Next, the aggregation server 50 receives the aggregation information from the sensor device 10 (Step S110). Furthermore, the aggregation server 50 performs fee processing based on the aggregation information received in Step S110 described above (Step Sill). Then, the information processing according to the present embodiment ends.

As described above, according to the present embodiment described above, it is possible to construct a framework in which various users can easily use information obtained from the sensing data acquired by various sensor devices 10.

### 1.7 System architecture enabling download of AI model

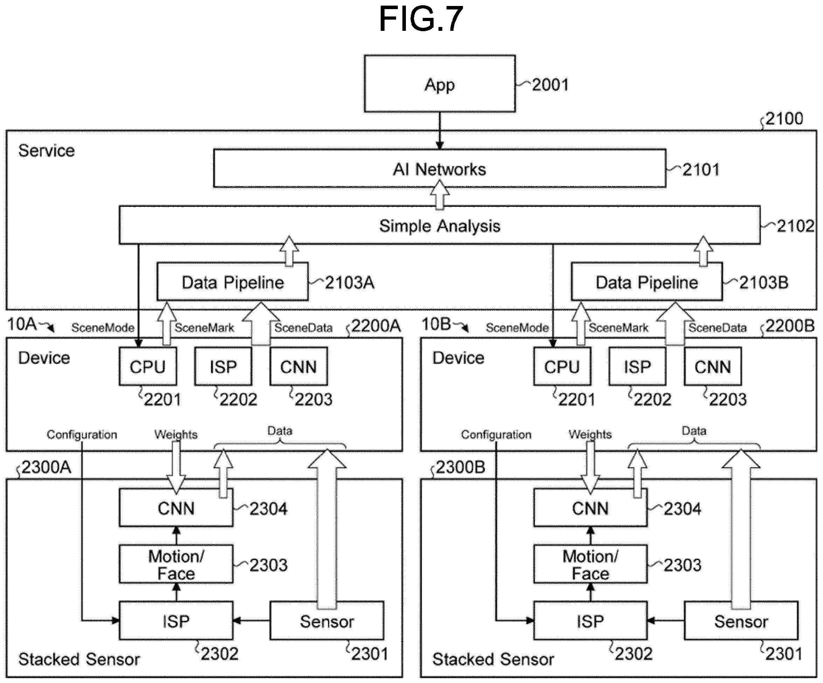

Next, a system architecture in the information processing system 1 according to the present embodiment, which enables download of the AI model to a device in compliance with the NICE specification, will be described in detail with reference to the drawings. FIG. 7 is a block diagram illustrating a schematic example of the system architecture that enables download of the AI model to a device in the information processing system according to the present embodiment. Note that, in the present description, a case where a download destination of the AI model is the sensor device 10 is exemplified, but the present invention is not limited thereto, and various modifications such as download to the user device 30 may be made. In addition, it is not essential to comply with the NICE specification, and the present embodiment can also be applied to a case where the AI model or the like is downloaded to a device via an interface not complying with the NICE specification.

In the example illustrated in FIG. 7, two sensor devices 10A and 10B are exemplified as the sensor device 10, and in terms of system architecture, a case where the sensor device 10A is configured with a processing unit 2200A that is a processing unit and a sensor unit 2300A that is a detection unit, and the sensor device 10B is configured with a processing unit 2200B that is also the processing unit and a sensor unit 2300B that is the detection unit will be exemplified. Note that, in the following description, when the individual processing units 2200A and 2200B are not distinguished from each other, a reference sign thereof is '2200'. Similarly, when the individual sensor units 2300A and 2300B are not distinguished from each other, a reference sign thereof is '2300'.

As illustrated in FIG. 7, the architecture according to the present embodiment includes an application 2001, a service unit 2100, the processing unit 2200, and the sensor unit 2300, and provides a service for using the application 2001 to the sensor device 10. In the present example, the sensor device 10 has, for example, a laminated chip structure in which a chip configuring the processing unit 2200 and a chip configuring the sensor unit 2300 are laminated, but the structure is not limited thereto.

### (Sensor unit 2300)

The sensor unit 2300 includes, for example, a sensor 2301, a signal processing unit 2302, a recognition unit 2303, and an inference unit 2304.

### . Sensor 2301

The sensor 2301 may be, for example, a sensor that generates image data, such as an image sensor that generates a color image or a monochrome image of a subject, an event-based vision sensor (EVS) that generates an image based on a luminance change of the subject, or a distance measuring sensor (also referred to as a depth sensor) that generates an image indicating a distance to the subject. However, the present invention is not limited thereto, and various sensors may be applied to the sensor 2301, including a sound collecting device such as a microphone that collects sound of a surrounding environment, a temperature sensor and a humidity sensor that measure temperature and humidity of the surrounding environment, and a water level sensor that measures a water level of a river or the like.

### · Signal processing unit 2302

The signal processing unit 2302 executes a predetermined process on the sensing data acquired by the sensor 2301 according to a configuration from the processing unit 2200. For example, when the sensor 2301 is an image sensor that generates image data, the signal processing unit 2302 executes the predetermined process such as white balance adjustment and distortion correction on the image data generated by the sensor 2301.

### · Recognition Unit 2303

The recognition unit 2303 executes a predetermined recognition process on the sensing data after the signal processing. For example, when the sensor 2301 is the image sensor, the recognition unit 2303 executes the predetermined recognition process such as motion detection and face area identification on the image data output from the signal processing unit 2302.

### · Inference unit 2304

The inference unit 2304 is, for example, an inference unit that executes inference using the AI model. The inference unit 2304 may include, for example, a programmable signal processing unit such as a digital signal processor (DSP) or a field-programmable gate array (FPGA), and executes inference with inputs of the sensing output from the sensor 2301 and a recognition result output from the recognition unit 2303, using the AI model and a weight parameter (weight) input from the processing unit 2200 or preset, and outputs an inference result obtained to the processing unit 2200. Note that FIG. 7 illustrates a case where the neural network of the AI model included in the inference unit 2304 is a convolutional neural network (CNN), but the neural network is not limited thereto, and may be an AI model using various neural networks such as a deep neural network (DNN), a recurrent neural network (RNN), a generative adversarial network (GAN), or an autoencoder.

### (Processing unit 2200)

The processing unit 2200 includes, for example, a central processing unit (CPU) 2201, a signal processing unit 2202, and an inference unit 2203.

### · CPU 2201

The CPU 2201 is an information processing unit that controls each part of the processing unit 2200 and the sensor unit 2300 and exchanges instructions, information, and the like with the service unit 2100 via the communication unit 170 (FIG. 2). Further, the CPU 2201 generates SceneMark based on data (sensing data and inference result) input from the sensor unit 2300 according to SceneMode described later set from the service unit 2100, and sends SceneMark to the service unit 2100. Note that, in the present description, SceneMode may be general settings for devices and the like, SceneData may be raw data such as images and sounds, and SceneMark may be an analysis result (e.g., metadata) by AI or the like associated with images, sounds, and the like.

### · Signal processing unit 2202

The signal processing unit 2202 executes a predetermined process such as automatic exposure control, autofocus, automatic white balance adjustment, and format conversion on the data (sensing data and inference result) input from the sensor unit 2300, and sends the result to the service unit 2100 as a part of SceneData.

### · Inference unit 2203

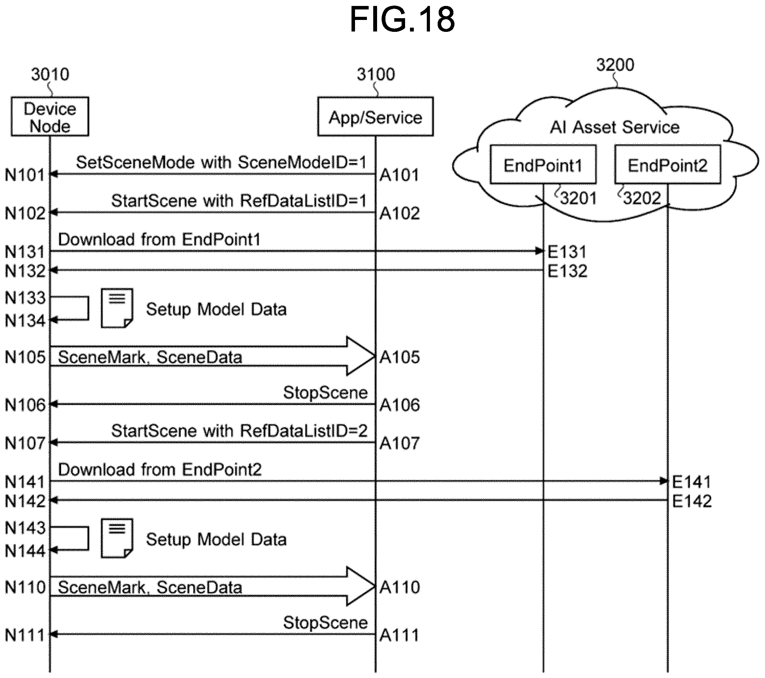

The inference unit 2203 is, for example, an inference unit that executes inference using the AI model, and is configured with a programmable signal processing unit such as a DSP or a field-programmable gate array (FPGA). The inference unit 2203 executes inference with inputs of the data (sensing data and inference result) output from the sensor unit 2300, using the AI model and the weight parameter (weight) acquired from a resource server (AI asset service) 3200 to be described later (FIG. 18 to be described later) or preset, and sends the data obtained by the inference to the service unit 2100 as a part of SceneData. Note that, in FIG. 7, a case where the neural network of the AI model included in the inference unit 2203 is the CNN is exemplified, but the neural network is not limited thereto, and may be an AI model using various neural networks such as the DNN, the RNN, the GAN, or the auto encoder.

### (Service unit 2100)

The service unit 2100 is a provider that provides a service using the application 2001 to the side of the processing unit 2200 via a predetermined network, and corresponds to, for example, the service server 20 in FIG. 1.

The service unit 2100 includes, for example, an AI network unit 2101, an analysis unit 2102, and data pipeline units 2103A and 2103B. In the following description, when the individual data pipeline units 2103A and 2103B are not distinguished from each other, a reference sign thereof is '2103'.

### · Data pipeline unit 2103

The data pipeline unit 2103 may be, for example, a set of tasks that sequentially executes predetermined processing such as format conversion and category classification on the data (SceneMark and SceneData) input from the processing unit 2200. The data subjected to the predetermined process is input to the analysis unit 2102.

### · Analysis unit 2102

The analysis unit 2102 may be, for example, a processing unit that executes analysis or simplified analysis on the data (SceneMark and SceneData) processed by the data pipeline unit 2103. For example, when AI-processed data acquired from the plurality of sensor devices 10 is collectively analyzed, the analysis unit 2102 executes analysis or simplified analysis on collected AI-processed data. As a specific example, for example, when a moving direction of a vehicle or the like imaged by the camera (sensor unit 100) or the like mounted on each sensor device 10 is analyzed and statistics thereof is generated, a statistical result (AI-processed data) is transmitted from each sensor device 10 to the service unit 2100. On the other hand, the analysis unit 2102 of the service unit 2100 may generate an integrated analysis result such as a heat map by analyzing the statistical result from each sensor device 10 based on the position information of each sensor device 10.

### · AI network unit 2101

The AI network unit 2101 includes one or more AI models, and is a processing unit that collects and organizes information required by a certain user from the network and provides a curation service that can be shared with other users. The AI network unit 2101 processes the data and/or the analysis result input from the analysis unit 2102 by combining, for example, one or more AI models according to the curation configuration designated from the application 2001.

### 1.8 Node architecture in device

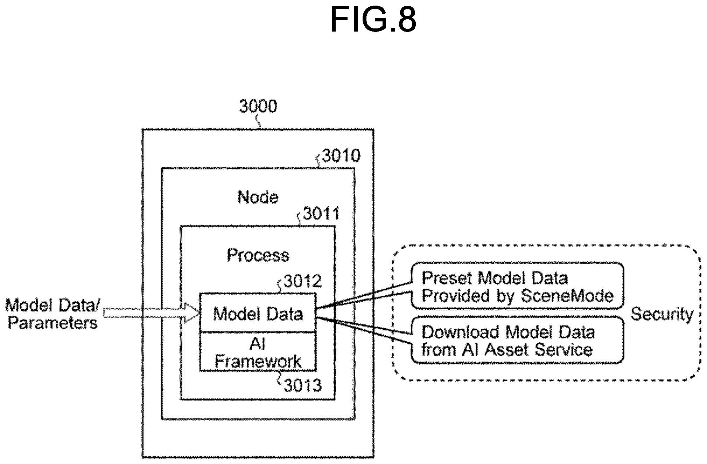

Next, a node architecture of a device capable of replacing the AI model conforming to the NICE specification will be described in detail with reference to the drawings. FIG. 8 is a block diagram illustrating a schematic example of the node architecture of the device according to the present embodiment. Note that, in the following description, the sensor device 10 including the processing unit 2200 and the sensor unit 2300 in FIG. 7 is illustrated as the device capable of replacing the AI model, and a reference sign thereof is '3000'. In addition, similarly to the system architecture described with reference to FIG. 7, it is not essential to comply with the NICE specification, and the present embodiment can also be applied to a case where the AI model or the like is downloaded to a device via an interface that is not complying with the NICE specification.

As illustrated in FIG. 8, the device (also referred to as an information processing apparatus) 3000 according to the present embodiment includes a node 3010 as a configuration for realizing the inference unit 2203 or 2304 using the AI model. For example, when the device 3000 is designed based on an architecture of a shared memory-type multiprocessor computer system or the like, the node 3010 may be a pair of processor and memory.

The node 3010 can implement a process 3011 that includes the inference unit including model data of the AI model and its weight parameters (hereinafter also collectively referred to as reference data (RefData)) 3012 and an AI framework 3013 for performing the inference using the reference data 3012, such as TensorFlow (registered trademark) or Keras. Therefore, the present embodiment provides a configuration for enabling replacement of the reference data 3012 in the process 3011. As a result, a function of the device 3000 can be replaced in a timely manner according to the use case.

### 1.9 Overall operation outline

Next, an overview of an overall operation of the information processing system according to the present embodiment will be described in detail with reference to the drawings.

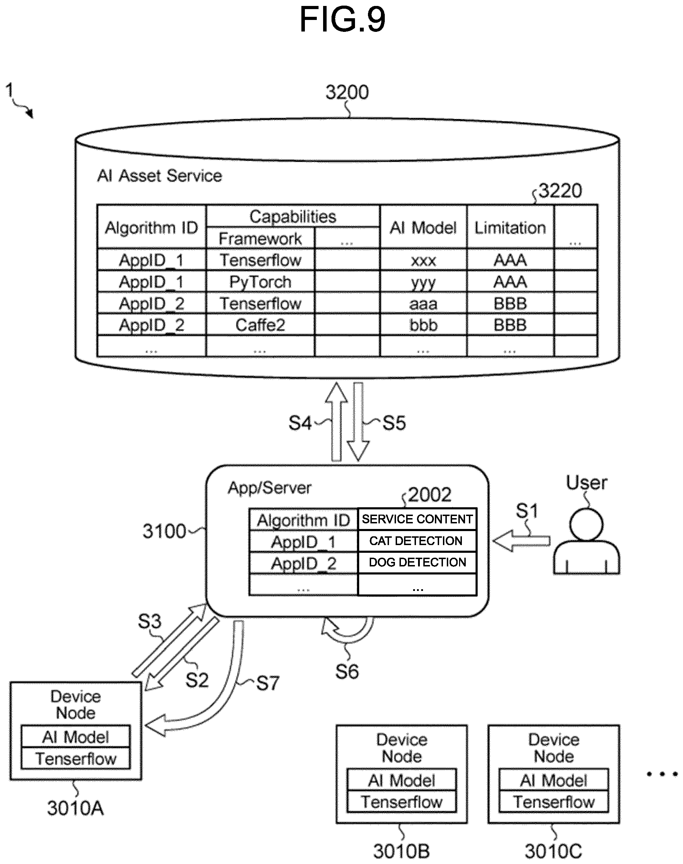

FIG. 9 is a schematic diagram illustrating an overview of the overall operation of the information processing system according to the present embodiment. As illustrated in FIG. 9, the information processing system 1 according to the present embodiment includes nodes 3010A, 3010B, 3010C, and so on implemented in one or more devices 3000, an application/service 3100, and the resource server 3200.

### (Step S1)

In Step S1, a user who uses the application 2001 accesses the application/service 3100 from his/her own device 3000 (e.g., a device 3000 provided with node 3010A), for example, and requests the use of the application 2001. Here, as an example, it is assumed that the use of the application 2001 is requested for the purpose of cat detection.

The application/service 3100 holds an application list 2002 that lists applications that can be provided to the user. In the application list 2002, an algorithm ID for uniquely identifying a providable application and a capability of each application (service content) are registered.

### (Step S2)

In Step S2, the application/service 3100 receiving the request for using the application 2001 by the user specifies the algorithm ID (AppID) of an application providing a service to the user according to the requested content, and makes an inquiry (GetCapabilities) about processing capability information (Capabilities) to the device 3000 or the node 3010A of the user who has requested the use.

### (Step S3)

In Step S3, in response to the inquiry in Step S2, the node 3010A or the device 3000 acquires information regarding its own processing capability. For example, device information regarding a model number of the device 3000, a specification of a CPU, and a memory capacity, a version and/or a parameter set of a preset or downloaded AI model, information regarding a framework held by the device 3000, and processing capability (e.g., resource) information (Capabilities) such as a communication speed and a bandwidth are acquired and notified to the application/service 3100.

### (Step S4)

In Step S4, the application/service 3100 notifies the resource server (AI asset service) 3200 that accumulates reference data, which is a set of downloadable model data and/or weight parameters, of the algorithm ID (AppID) specified in Step S2 and the processing capability information (capabilities) notified in Step S3.

The resource server 3200 holds a model list 3220 that lists AI models that can be provided to the device 3000. In the model list 3220, an AI model that can be provided, information regarding use limitation (limitation), and the like are registered for each algorithm ID and processing capability information (capabilities). In other words, learned model data and weight parameters thereof are registered in the resource server 3200 and managed by the model list 3220.

### (Step S5)

In Step S5, the resource server 3200 specifies the AI model, the use limitation, and the like (xxx, AAA, and so on) to be provided to the user based on the notified algorithm ID (AppID) and processing capability information (capabilities), and downloads them to the application/service 3100. In other words, the resource server 3200 specifies and provides optimum reference data from the model list 3220 according to the use case.

As a method of identifying the optimum reference data by the resource server 3200, for example, information such as content processed by the reference data to be downloaded, a model number of an executable device, a processing amount, the use limitation of the AI model, the use time of the AI model, an expiration date and a use region of the AI model, and a version of the model may be managed by the model list 3220, and the reference data suitable for the device 3000 to be used according to the use case may be specified from the managed information.

### (Step S6)

In Step S6, the application/service 3100 verifies whether or not the user who has requested the use of the application 2001 has the use authority based on the use limitation (AAA) acquired from the resource server 3200.

### (Step S7)

In Step S7, as a result of the verification in Step S6, when the user has the authority to use the application 2001, the application/service 3100 downloads the reference data acquired from the resource server 3200 in Step S5 to the user.

Note that, in the present example, the application/service 3100 may be arranged in the service server 20 (FIG. 1) described above, or may be arranged in the device 3000 (e.g., sensor device 10 in FIG. 1).

In the present example, the reference data is downloaded from the resource server 3200 to the node 3010 via the application/service 3100, but the present invention is not limited thereto, and the reference data may be directly downloaded from the resource server 3200 to the node 3010.

### 1.10 Basic operation sequence

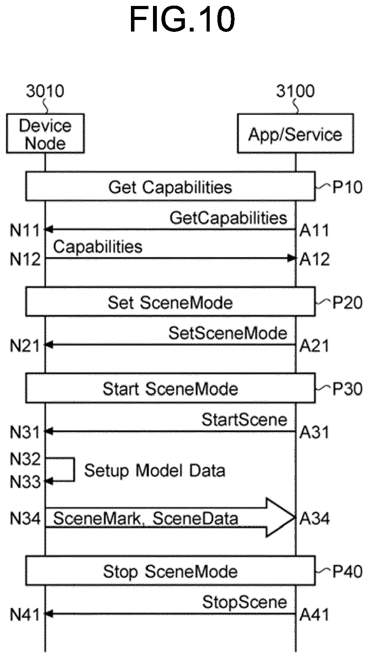

Next, a basic operation sequence when the inference using the AI model is executed for each node 3010 of the device 3000 from the side of the application 2001 or the service unit 2100 according to the NICE specification will be described. FIG. 10 is a sequence diagram illustrating an example of the basic operation sequence according to the present embodiment. Note that, in the following description, the application 2001 and the service unit 2100 that give an instruction to the node 3010 are collectively referred to as the application/service 3100. For example, the application/service 3100 may have a configuration corresponding to the service server 20 in FIG. 1.

As illustrated in FIG. 10, the basic operation includes a capability acquisition phase P10 in which the application/service 3100 acquires the processing capability of the device 3000 and/or the node 3010, a mode setting phase P20 in which SceneMode is set to the node 3010, an execution phase P30 in which the node 3010 is caused to execute AI processing for each SceneMode, and an end phase P40 in which the node 3010 is caused to end the AI processing.

### (Capability acquisition phase P10)

In the capability acquisition phase P10, first, the application/service 3100 notifies the node 3010 of an instruction (GetCapabilities) for reporting the processing capability of the device 3000 and/or the node 3010 to the application/service 3100 (A11 → N11). In response, the node 3010 notifies the application/service 3100 of its own processing capability information (Capabilities) (N12 → A12).

Note that the processing capability information (Capabilities) of each device 3000 may be managed in advance in the application/service 3100 by performing the capability acquisition phase P10 in advance.

### (Mode setting phase P20)

In the mode setting phase P20, an instruction (SetSceneMode) regarding which SceneMode will be used is notified from the application/service 3100 to the node 3010 (A21 → N21).

### (Execution phase P30)

In the execution phase P30, first, an instruction (StartScene) for starting the inference using the AI model specified by SetSceneMode is notified from the application/service 3100 to the node 3010 (A31 → N31). In response, on the node 3010 side, setup of the reference data designated by SceneMode in the mode setting phase P20 is executed (N32 → N33). Then, on the node 3010 side, SceneMark and SceneData are generated using the reference data designated by SceneMode based on the data acquired by the sensor unit 2300, and are transmitted to the application/service 3100 (N34 → A34). Note that a transmission destination of the generated SceneMark and SceneData is not limited to the application/service 3100, and may be another device 3000 or the like.

### (End Phase P40)

In the end phase P40, an instruction (StopScene) for ending the inference using the AI model is notified from the application/service 3100 to the node 3010 (from A41 to N41). In response, on the node 3010 side, the inference using the AI model specified by SceneMode is terminated.

### 1.11 Example of SceneMode object

Next, an example of a SceneMode object that is an application programming interface (API) object transmitted by the application/service 3100 to set SceneMode to the node 3010 in the mode setting phase P20 in FIG. 10 according to the NICE specification will be described below.

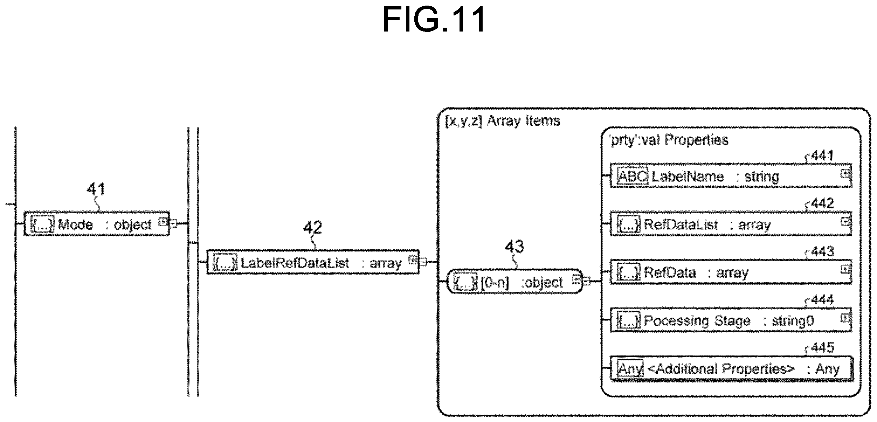

FIG. 11 is a diagram illustrating the example of the SceneMode object according to the present embodiment. As illustrated in FIG. 11, a SceneMode object 41 can include LabelRefDataList 42. In addition, LabelRefDataList 42 can include one or more objects 43 including LabelName 441, RefDataList 442, RefData 443, Processing Stage 444, and Additional Properties 445.

### (LabelName 441)

LabelName 441 stores a character string indicating a label name of each object 43.

### (RefDataList 442)

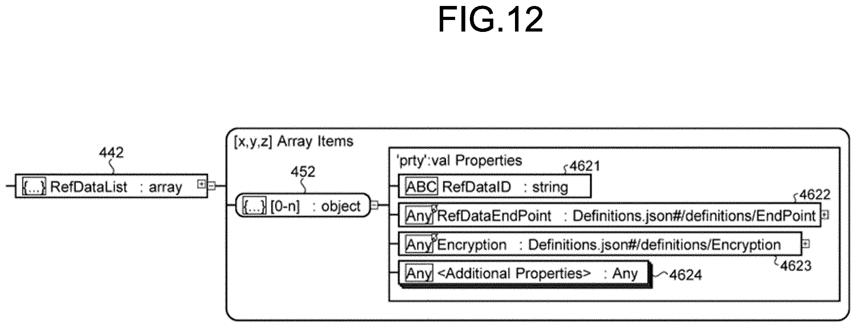

RefDataList 442 stores information for downloading the AI model and/or the weight parameter from the network. FIG. 12 is a diagram illustrating an example of RefDataList according to the present embodiment. As illustrated in FIG. 12, RefDataList 442 may include an object 452 including RefDataID 4621, RefDataEndPoint 4622, Encryption 4623, and Additional Properties 4624.

RefDataID 4621 stores an identifier for uniquely identifying the reference data to be downloaded.

RefDataEndPoint 4622 stores EndPoint (e.g., a uniform resource locator (URL)) that is address information of the reference data arranged in a downloadable manner on a network. Therefore, when the AI model is added, updated, or switched with respect to the node 3010, the reference data is downloaded from EndPoint designated by RefDataEndPoint 4622 and incorporated into the node 3010.

Encryption 4623 stores reference information for identifying a Privacy object for encrypting the reference data. Therefore, when the downloaded reference data is encrypted, the encrypted reference data is decrypted by using the Privacy object specified by Encryption 4623.

Additional Properties 4624 stores additional information. This Additional Properties 4624 may be used for various purposes.

### (RefData 443)

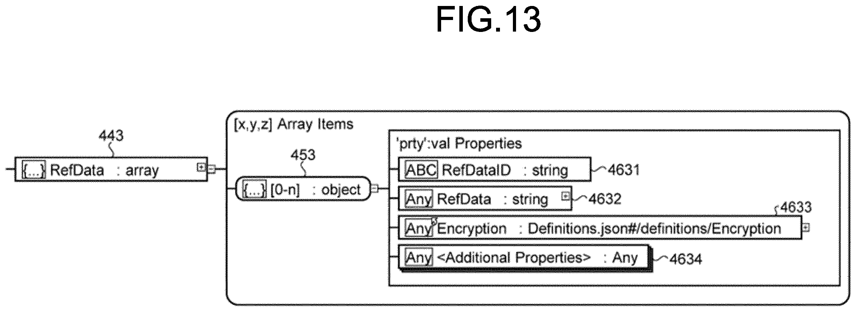

RefData 443 stores information for designating reference data preset in the device 3000 or the node 3010. FIG. 13 is a diagram illustrating an example of RefData according to the present embodiment. As illustrated in FIG. 13, RefData 443 may include an object 453 including RedDataID 4631, RefData 4632, Encryption 4633, and Additional Properties 4634.

RedDataID 4631 stores an identifier for uniquely identifying reference data preset in the device 3000 or the node 3010.

RefData 4632 stores information designating reference data preset in the device 3000 or the node 3010. Therefore, when SceneMode specified by SetSceneMode notified from the application/service 3100 is SceneMode specified by the identifier of RedDataID 4631, the preset reference data is incorporated into the node 3010.

Encryption 4633 stores the reference information for identifying the Privacy object for encrypting the reference data. Therefore, when the preset reference data is encrypted, the reference data is decrypted by using the Privacy object specified by Encryption 4633.

Additional Properties 4634 stores additional information. This Additional Properties 4634 may be used for various purposes.

### (Processing Stage 444)

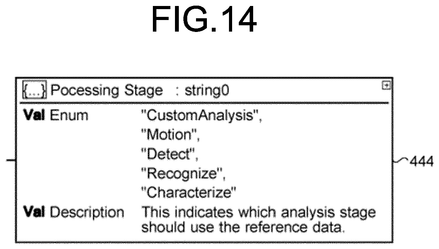

Processing Stage 444 stores information for specifying in which process step the reference data is used. FIG. 14 is a diagram illustrating an example of Process Stage according to the present embodiment. As illustrated in FIG. 14, examples of the processing steps defined in Processing Stage 444 include "CustomAnalysis", "Motion", "Detect", "Recognize", and "Characterize". However, the present invention is not limited thereto, and various process steps may be defined.

### (Additional Properties 445)

Additional Properties 445 stores additional information. This Additional Properties 445 may be used for various purposes.

### 1.12 Example of StartScene object

Next, an example of a StartScene object that is the API object transmitted to cause the node 3010 to execute SceneMode in the execution phase P30 in FIG. 10 according to the NICE specification, will be described below.

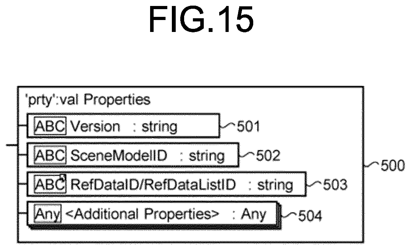

FIG. 15 is a diagram illustrating an example of the StartScene object according to the present embodiment. As illustrated in FIG. 15, the StartScene object 500 can include Version 501, SceneModeID 502, RefDataID/RefDataListID 503, and Additional Properties 504.

### (Version 501)

Version 501 stores version information of SceneMode specified by SceneMode ID to be described later.

### (SceneMode ID 502)

SceneMode ID 502 stores an identifier for uniquely identifying SceneMode.

### (RefDataID/RefDataListID 503)

RefDataID/RefDataListID 503 stores an identifier for identifying the reference data to be executed. This RefDataID/RefDataListID 503 is a new field added to the existing NICE specification. Note that RefDataID/RefDataListID 503 may be omitted, for example, when there is one piece of reference data included in the node 3010.

### (Additional Properties 504)

Additional Properties 504 stores additional information. This Additional Properties 504 may be used for various purposes.

### 1.13 Example of model data

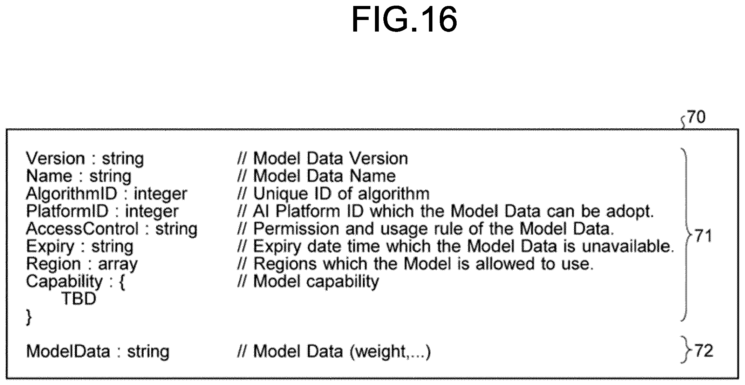

FIG. 16 is a diagram illustrating an example of the model data in the reference data according to the present embodiment. As illustrated in FIG. 16, model data 70 includes a header 71 and a body 72 in which the model data is stored. The header 71 includes version information (Version) of the model data, a name (Name) of the model data, an identifier (AlgorithmID) for uniquely identifying an algorithm adopted for the model data, an identifier (PlatformID) for identifying an AI platform into which the model data can be introduced, control information (AccessControl) indicating permission and use rules of the model data, contract expiry date and time (Expiry) indicating the time the model data is made unavailable, information (Region) indicating a region in which the model data is made available, and performance (Capability) of the model data.

### 1.14 Operation sequence example when using preset AI model

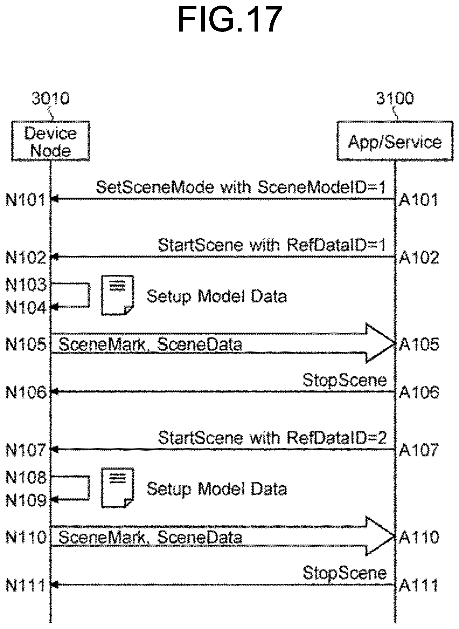

Next, an operation sequence when the inference using the preset AI model is executed for each node 3010 of the device 3000 from the application/service 3100 side according to the NICE specification will be described. FIG. 17 is a sequence diagram illustrating an example of the operation sequence when the preset AI model according to the present embodiment is used. In FIG. 17 and the following description, the capability acquisition phase P10 is omitted for simplification of the description. In addition, in the following description, a case where two pieces of reference data are switched and used is exemplified, but the present invention is not limited thereto, and a similar operation sequence can be applied to a case where one piece of reference data is used or a case where three or more pieces of reference data are switched and used.

### (Mode setting phase P20)

As illustrated in FIG. 17, in this operation, the instruction (SetSceneMode) regarding which SceneMode will be used is notified from the application/service 3100 to the node 3010 (A101 → N101). For example, in the present example using the preset AI model, SetSceneMode designating SceneMode 41 (FIG. 11) with SceneModeID = 1 is notified from the application/service 3100 to the node 3010.

### (First execution phase P30)

Next, the application/service 3100 notifies the node 3010 of the instruction (StartScene) for starting inference using the preset reference data of RefDataID = 1 (FIG. 13) in SceneMode with SceneModeID = 1 specified by SetSceneMode (A102 → N102).

In response, the node 3010 executes setup of the preset reference data of RefDataID = 1 in SceneMode with SceneModeID = 1 specified by SetSceneMode (N103 → N104).

Then, the node 3010 generates SceneMark and SceneData by using the reference data set up based on the data acquired by the sensor unit 2300, and transmits SceneMark and SceneData to the application/service 3100 (N105 → A105).

### (First end phase P40)

Next, the instruction (StopScene) for terminating SceneMode being executed is notified from the application/service 3100 to the node 3010 (A106 → N106). In response, the node 3010 ends SceneMode being executed.

### (Second execution phase P30)

Next, the application/service 3100 notifies the node 3010 of the instruction (StartScene) for starting the inference using the preset reference data of RefDataID = 2 (FIG. 13) in SceneMode with SceneModeID = 1 specified by SetSceneMode (A107 → N107).

In response, the node 3010 executes setup of the preset reference data of RefDataID = 2 in SceneMode with SceneModeID = 1 specified by SetSceneMode (N108 → N109).

Then, the node 3010 generates SceneMark and SceneData by using the reference data set up based on the data acquired by the sensor unit 2300, and transmits SceneMark and SceneData to the application/service 3100 (N110 → A110).

### (Second end phase P40)

Next, the instruction (StopScene) for terminating SceneMode being executed is notified from the application/service 3100 to the node 3010 (A111 → N111). In response, the node 3010 ends SceneMode being executed.

### 1.15 Operation sequence example when AI model is downloaded and used

Next, an operation sequence when the application/service 3100 side causes each node 3010 of the device 3000 to download the AI model and execute the inference according to the NICE specification will be described. FIG. 18 is a sequence diagram illustrating an example of the operation sequence when the AI model according to the present embodiment is downloaded. In FIG. 18 and the following description, the capability acquisition phase P10 is omitted for simplification of the description. In addition, in the following description, a case where two pieces of reference data are switched and used is exemplified, but the present invention is not limited thereto, and a similar operation sequence can be applied to a case where one piece of reference data is used or a case where three or more pieces of reference data are switched and used. Furthermore, in the following description, the same reference signs are given to operations similar to the operation sequence illustrated in FIG. 17.

### (Mode setting phase P20)

As illustrated in FIG. 18, in this operation, the instruction (SetSceneMode) regarding which SceneMode will be used is notified from the application/service 3100 to the node 3010 (A101 → N101). In the present example in which the AI model is downloaded and used, for example, similar to FIG. 17, SetSceneMode for designating SceneMode 41 (FIG. 11) with SceneModeID = 1 is notified from the application/service 3100 to the node 3010.

### (First execution phase P30)

Next, the instruction (StartScene) for starting the inference using reference data of RefDataListID = 1 (FIG. 12) in SceneMode with SceneModeID = 1 specified by SetSceneMode is notified from the application/service 3100 to the node 3010 (A102 → N102).

In response, the node 3010 accesses an endpoint 3201 in the resource server (AI Asset Service) 3200 based on RefDataEndPoint 4622 stored in RefDataList 442 (FIG. 12) with RefDataListID = 1 in SceneMode with SceneModeID = 1 specified by SetSceneMode (N131 → E131), and downloads the reference data of RefDataListID = 1 stored in this endpoint 3201 (E132 → N132). Note that the reference data may be downloaded, for example, by the model acquisition unit 140 in FIG. 2 (the same applies hereinafter).

Note that, for example, when the node 3010 holds the reference data of RefDataListID = 1 (FIG. 12) in SceneMode with SceneModeID = 1 by download executed in the past or the like, the download of the reference data from the endpoint 3201 (N131 → E131, E132 → N132) may be omitted.

Then, the node 3010 executes setup of the reference data downloaded from the resource server 3200 (N133 → N134).

Subsequently, similarly to FIG. 17, the node 3010 generates SceneMark and SceneData by using the reference data set up based on the data acquired by the sensor unit 2300, and transmits SceneMark and SceneData to the application/service 3100 (N105 → A105).

### (First end phase P40)

Next, similar to FIG. 17, the instruction (StopScene) for terminating the SceneMode being executed is notified from the application/service 3100 to the node 3010 (from A106 to N106), and in response to this, the node 3010 terminates the SceneMode being executed.

### (Second execution phase P30)

Next, the instruction (StartScene) for starting the inference using reference data of RefDataListID = 2 (FIG. 12) in SceneMode with SceneModeID = 1 specified by SetSceneMode is notified from the application/service 3100 to the node 3010 (A107 → N107).

In response, the node 3010 accesses an endpoint 3202 in the resource server (AI Asset Service) 3200 (N141 → E141) based on RefDataEndPoint 4622 stored in RefDataList 442 (FIG. 12) with RefDataListID = 2 in SceneMode with SceneModeID = 1 specified by SetSceneMode, and downloads reference data with RefDataListID = 1 stored in this endpoint 3202 (E142 → N142).

Note that, similarly to the above, for example, when the node 3010 holds the reference data of RefDataListID = 1 (FIG. 12) in SceneMode with SceneModeID = 2 by download executed in the past, the download of the reference data from the endpoint 3202 (N131 → E131, E132 → N132) may be omitted.

Then, the node 3010 executes setup of the reference data downloaded from the resource server 3200 (N143 → N144).

Subsequently, similarly to FIG. 17, the node 3010 generates SceneMark and SceneData by using the reference data set up based on the data acquired by the sensor unit 2300, and transmits SceneMark and SceneData to the application/service 3100 (N110 → A110).

### (First end phase P40)

Next, similar to FIG. 17, the instruction (StopScene) for terminating the SceneMode being executed is notified from the application/service 3100 to the node 3010 (from A111 to N111), and in response to this, the node 3010 terminates the SceneMode being executed.

### 1.16 Modified example

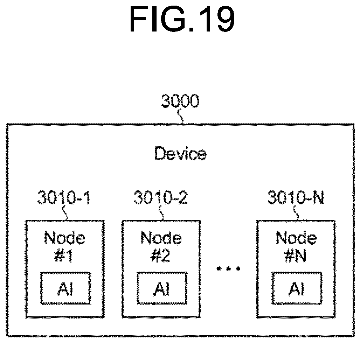

In the above-described embodiment, a case where one device 3000 includes one node 3010 has been illustrated. However, as illustrated in FIG. 19, each device 3000 may include a plurality of nodes 3010-1, 3010-2 to 3010-N (N is an integer of three or more). In that case, SceneMode can be set for each node 3010.

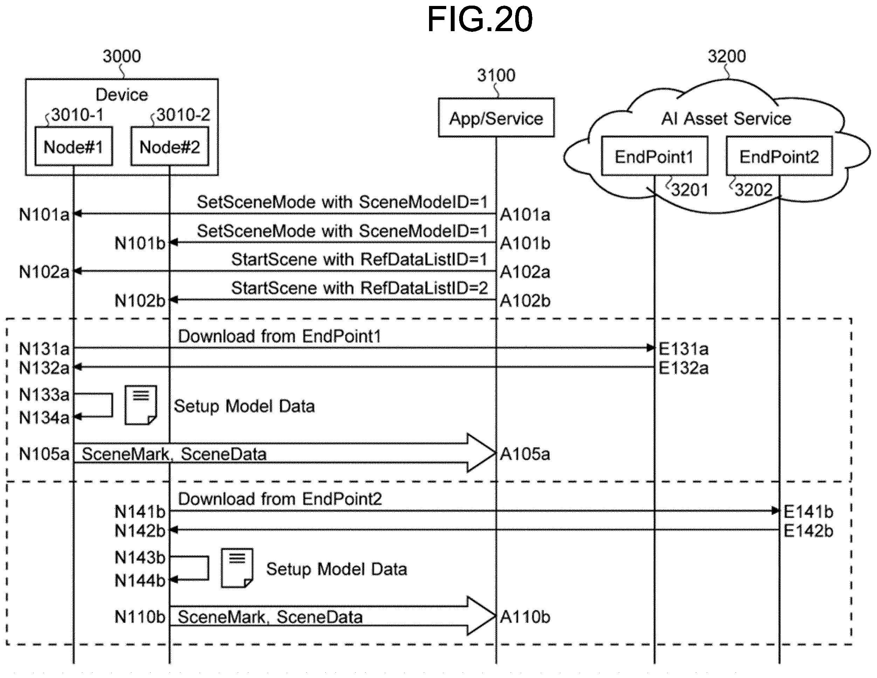

FIG. 20 is a sequence diagram illustrating an example of an operation sequence when the AI model is downloaded according to the modified example of the present embodiment, and is the diagram illustrating an example of the operation sequence when different SceneMode is set for each node. In FIG. 20 and the following description, the capability acquisition phase P10 is omitted for simplification of the description. In the following description, operations similar to those in the operation sequence illustrated in FIG. 17 or FIG. 18 are given the same reference signs.

### (Mode setting phase P20)

As illustrated in FIG. 20, in this example, one device 3000 includes two nodes 3010-1 and 3010-2. Therefore, in the operation according to the present modified example, the instruction (SetSceneMode) regarding which SceneMode will be used is notified from the application/service 3100 to the node 3010-1 (A101a → N101a), and the instruction (SetSceneMode) regarding which SceneMode will be used is notified from the application/service 3100 to the node 3010-2 (A101b → N101b).

### (First execution phase P30)

Next, the instruction (StartScene) for starting the inference using reference data of RefDataListID = 1 (FIG. 12) in SceneMode with SceneModeID = 1 specified by SetSceneMode is notified from the application/service 3100 to the node 3010-1 (A102a → N102a).

In response, the node 3010-1 accesses the endpoint 3201 in the resource server (AI Asset Service) 3200 (N131a → E131a) based on RefDataEndPoint 4622 stored in RefDataList 442 (FIG. 12) with RefDataListID = 1 in SceneMode with SceneModeID = 1 specified by SetSceneMode, and downloads reference data with RefDataListID = 1 stored in this endpoint 3201 (E132a → N132a).

Note that, for example, when the node 3010-1 holds the reference data of RefDataListID = 1 (FIG. 12) in SceneMode with SceneModeID = 1 by download executed in the past or the like, the download of the reference data from the endpoint 3201 (N131a → E131a, E132a → N132a) may be omitted.

Then, the node 3010-1 executes setup of the reference data downloaded from the resource server 3200 (N133a → N134a).

Subsequently, similarly to FIG. 17, the node 3010-1 generates SceneMark and SceneData by using the reference data set up based on the data acquired by the sensor unit 2300, and transmits SceneMark and SceneData to the application/service 3100 (N105a → A105a) .

### (First end phase P40)

Next, similar to FIG. 17, the application/service 3100 notifies the node 3010-1 of the instruction (StopScene) for terminating SceneMode being executed, and in response to this, the node 3010-1 terminates SceneMode being executed.

### (Second execution phase P30)

Furthermore, the instruction (StartScene) for starting the inference using the reference data of RefDataListID = 2 (FIG. 12) in SceneMode with SceneModeID = 1 specified by SetSceneMode is notified from the application/service 3100 to the node 3010-2 (A102b → N102b).

In response, the node 3010-2 accesses the endpoint 3202 in the resource server (AI Asset Service) 3200 (N141b → E141b) based on RefDataEndPoint 4622 stored in RefDataList 442 (FIG. 12) with RefDataListID = 2 in SceneMode with SceneModeID = 1 specified by SetSceneMode, and downloads the reference data with RefDataListID = 1 stored in this endpoint 3202 (E142b → N142b).

Note that, similarly to the above, for example, when the node 3010-2 holds the reference data of RefDataListID = 1 (FIG. 12) in SceneMode with SceneModeID = 2 by download executed in the past, the download of the reference data from the endpoint 3202 (N141b → E141b, E142b → N142b) may be omitted.

Then, the node 3010-2 executes setup of the reference data downloaded from the resource server 3200 (N143b → N144b).

Subsequently, similarly to FIG. 17, the node 3010-2 generates SceneMark and SceneData by using the reference data set up based on the data acquired by the sensor unit 2300, and transmits SceneMark and SceneData to the application/service 3100 (N110b → A110b) .

### (First end phase P40)

Next, similar to FIG. 17, the application/service 3100 notifies the node 3010-2 of the instruction (StopScene) for terminating SceneMode being executed, and in response to this, the node 3010-2 terminates SceneMode being executed.

### 1.17 Other modified examples

In the above-described embodiment, the case where the application/service 3100 notifies the node 3010 of the start instruction (StartScene) of SceneMode each time the AI model is switched and downloads the reference model has been exemplified. However, the present invention is not limited thereto, and the application/service 3100 notifies the node 3010 or the device 3000 of reference data according to an assumed use case in advance, and the node 3010 or the device 3000 downloads the reference data notified in advance, so that the AI model can be quickly switched according to the switching of the use case.

Furthermore, in the embodiment described above, the case where the application/service 3100 determines whether or not to switch the AI model to the node 3010 and instructs the node 3010 to download the reference data when switching the AI model has been exemplified, but the present invention is not limited thereto. For example, the download instruction of the reference data may be notified by determining whether or not another device 3000 or the node 3010 on the network switches the AI model. Alternatively, the device 3000 or the node 3010 itself may determine switching of the AI model and voluntarily execute download of the reference data or switching of the preset AI model. In other words, the configuration (switching unit) for switching the inference unit of the node 3010 according to the use case may be any of the device 3000 or the node 3010 itself, the application/service 3100, another device 3000 or node 3010 on the network, or may be a configuration incorporated in any of the device 3000 or the node 3010 itself, the application/service 3100, or another device 3000 or node 3010 on the network.

The determination of whether or not to switch the AI model may be executed based on, for example, position information acquired by the positioning unit 110 mounted on the sensor device 10, changes in temperature and humidity, information recognized or extracted from the image data, a recognition result of the previous AI model, and the like. This determination may be executed in any of the device 3000, the application/service 31000, the resource server 3200, and another device 3000 that have received the sensing data from the sensor unit 2300.

In addition, in order to know an output format of the data (SceneData) output from the AI model, the format may be placed as a schema in the resource server 3200 or the like, and an identifier for identifying the output format may be given to the data output from the AI model. For example, a field named Schema may be provided in SceneMark associated with SceneData, and the identifier for identifying the output format may be stored in the Schema field. In this case, the application/service 3100 or another device 3000 that has received SceneMark and SceneData can specify the format of SceneData based on the identifier stored in the Schema field of SceneMark.

Furthermore, the data (SceneData) output from two or more or all AI models may have a common output format. Alternatively, a format conversion unit that uses the data (SceneData) output from the AI model as a common output format may be mounted on the device 3000, the application/service 3100, or the like.

Furthermore, the reference data managed by the resource server 3200 may be relearned using SceneMark and/or SceneData obtained in each node 3010. The relearned reference data may be managed in a downloadable manner in the resource server 3200, for example, as reference data whose version has been updated.

Note that, in the above description, the case where the resource server 3200 is the download source of the model data and the weight parameter has been exemplified, but the present invention is not limited thereto. For example, another device 3000 on the network can be used. Furthermore, the functions of the application/service 3100 described above can be configured to be executed by another device 3000 on the network.

Furthermore, in the present embodiment, the aggregation server 50 may charge a data sample fee not only for the distribution of the distribution data acquired from the sensing data but also for the distribution of the model data and the weight parameter (reference data) of the AI model. For example, the aggregation server 50 may aggregate the distribution amount of the reference data for each user or user device 30 or for each sensor device 10 in cooperation with the authentication server 40 described above, and determine the data usage fee based on the aggregation or the like.

For example, the service server 20, the sensor device, and the user device 30 that can be distribution sources of the reference data may include the aggregation unit that aggregates the distribution amount of the reference data for each request source of the reference data to generate aggregation information, and an aggregation information transmission unit that transmits the aggregation information for each request source to the aggregation server 50, similarly to the aggregation unit 148 in the sensor device 10 illustrated in FIG. 2. On the other hand, the fee processing unit 534 in the aggregation server 50 may determine the data usage fee for each request source based on the aggregation information of the reference data, and exchange the data usage fee between a device administrator as the distribution source and each request source.

### 1.18 Summary

As described above, according to the present embodiment, the device 3000 can download the model data and the weight parameters at an arbitrary timing and implement the model data and the weight parameters in the node 3010. Accordingly, since the functions of the device 3000 can be replaced in a timely manner according to the use case, the functions can be flexibly changed according to various use cases.

Furthermore, for example, since the AI model that can be provided is managed for each algorithm ID and processing capability information (Capabilities) of the device 3000 using the model list 3220, it is possible to provide optimal reference data according to the use case or the device 3000.

Furthermore, for example, by managing the information regarding the use limitation of the AI model (Limitation) using the model list 3220, it is possible to influence various services such as replacement with the AI model in compliance with the laws and regulations of the country in which the device 3000 is used, and offering of the AI model at a limited period event.

Furthermore, for example, by managing the use purpose of the AI model using the application list 2002, it is possible to know in advance what each AI model can do. As a result, it is possible to provide an appropriate AI model in response to a request from the user.

Furthermore, since it is possible to manage a wide variety of AI models in the resource server 3200 and the like, it is possible to select an appropriate AI model capable of outputting necessary data and implement the selected AI model in the device 3000.

In addition, since the reference data can be acquired not only from the resource server 3200 but also from another device 3000 on the network, it is possible to increase a degree of freedom with respect to the location of the reference model.

In addition, since the reference data is not limited to the model data and can be the weight parameter, it is also possible to switch the AI model with the minimum data replacement.

In addition, since it is possible to replace the AI model and determine the necessary AI model based on the sensing data, it is possible to determine replacement or switching of the AI model in any of the own device 3000, another device 3000, the application/service 3100, and the resource server 3200.

In addition, since it is possible to replace the AI model and determine the necessary AI model based on the position information acquired by the GPS and the like, it is also possible to determine which AI model is the necessary AI model or the optimal AI model near the position of the device 3000.

Furthermore, by setting the output format of the data (SceneData) output from the AI model to a common output format, the configuration of the subsequent stage that performs processing, analysis, and recognition on the data (SceneData) can be made common, so that the processing load on the data (SceneData) can be reduced.

In addition, since the version of the reference data is managed, it is possible to provide the latest AI model even when the AI model is updated by relearning or the like.

In addition, when one device 3000 includes a plurality of nodes 3010, the AI model can be replaced or switched for each node 3010. As a result, it is possible to freely switch to an appropriate combination of AI models according to a scene or the like even when polygonal inference is performed from the sensing data acquired by one sensor 2301.

In addition, by adding the Schema field to SceneMark and managing the output format of data (SceneData) output from the AI model, the output format can be easily known in the configuration of the subsequent stage that performs processing, analysis, and recognition on the data (SceneData), so that the processing load on the data (SceneData) can be reduced.

In addition, by adding the Schema field to SceneMark and managing the output format of the data (SceneData) output from the AI model, the output format can be easily known in the configuration of the subsequent stage even when the AI model is replaced or switched, so that the processing load on the data (SceneData) can be reduced.

Furthermore, for example, by managing the information regarding the use limitation of the AI model (Limitation) using the model list 3220, it is possible to determine whether or not to use the AI model according to the user. Therefore, it is possible to control whether or not to use the AI model according to the use case, such as the owner of the camera or the person who receives data.

Furthermore, by configuring the AI model to be replaceable, it is possible to generate the data (SceneData) for a specific user by time division or parallel processing, and thus, it is possible to share the same device 3000 even when the use purposes of the users who use the devices at the same time are different.

Furthermore, since the device 3000 itself can determine whether or not it is necessary to download the AI model, it is possible to switch the AI model more timely according to the use case.

### 2. Second embodiment

Next, an information processing system and an information processing method according to a second embodiment of the present disclosure will be described in detail with reference to the drawings.

In the above-described embodiment or modified examples thereof, the reference data downloaded from the resource server 3200 or another device 3000 may be protected by encryption, an electronic signature, or the like.

Here, when the reference data is encrypted, SceneEncryptionKey distributed in advance to each device 3000 can be used for the encryption. Furthermore, an algorithm conforming to the encryption of SceneData and SceneMark according to the NICE specification may be adopted for an encryption algorithm. Furthermore, as an encryption format, a format such as JSON Web Encryption (JWE) Compact Serialization can be adopted.

### 2.1 Example of Encryption object

Information regarding SceneEncryptionKey used for encryption is stored, for example, in Encryption 4623 (FIG. 12) in the object 452 or Encryption 4633 (FIG. 13) in the object 453 in the SceneMode object as an Encryption object.

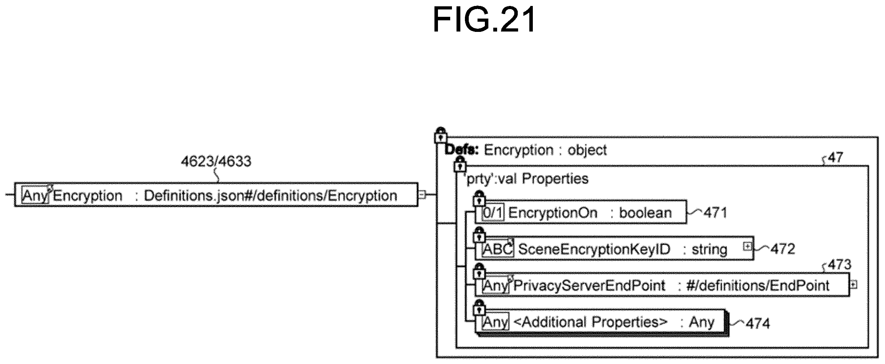

FIG. 21 is a diagram illustrating an example of the Encryption object according to the present embodiment. As illustrated in FIG. 21, an Encryption object 47 in Encryption 4623 (FIG. 12) or Encryption 4633 may include EncryptionOn 471, SceneEncryptionKeyID 472, PrivacyServerEndPoint 473, and Additional Properties 474.

EncryptionOn 471 stores information indicating whether or not the reference data is encrypted. For example, when 'True' is stored in EncryptionOn 471, the reference data is encrypted, and when 'false' is stored, the reference data is not encrypted.

SceneEncryptionKeyID 472 stores an identifier for identifying the Privacy object used to encrypt the reference data.

PrivacyServerEndPoint 473 stores EndPoint (e.g., URL) that is address information of the Privacy object arranged in a downloadable manner on a network. When decrypting the reference data, the device 3000 downloads the Privacy object from EndPoint specified by PrivacyServerEndPoint 473 and decrypts the reference data. Note that the model acquisition unit 140 in FIG. 2 may download the Privacy object.

Additional Properties 474 stores additional information. This Additional Properties 474 may be used for various purposes.

### 2.2 Example of Privacy object

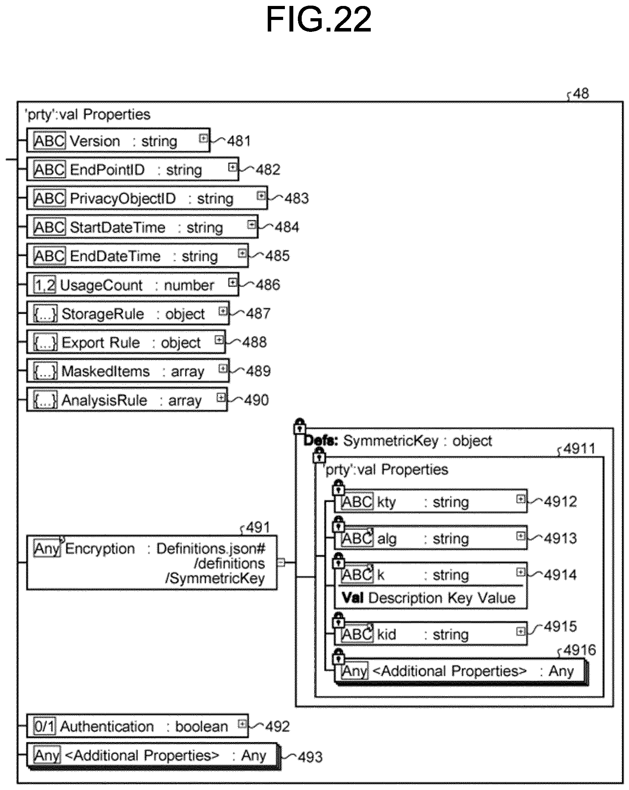

FIG. 22 is a diagram illustrating an example of the Privacy object according to the present embodiment. As illustrated in FIG. 22, a Privacy object 48 may include Version 481, EndPoint ID 482, PrivacyObjectID 483, StartDateTime 484, EndDateTime 485, UsageCount 486, Storage Rule 487, ExportRule 488, MaskedItems 489, AnalysisRule 490, Encryption 491, Authentication 492, and Additional Properties 493.

Among these, Encryption 491 may include, as a SymmetricKey object 4911, kty (Key Type) 4912, alg (Algorithm) 4913, k (Key Instance) (also referred to as a Key object) 4914, kid (Key ID) 4915, and Additional Properties 4916.

In kty 4912, information indicating a key type (Key type) of SceneEncryptionKey is stored.

In alg 4913, information indicating an encryption algorithm used for encryption is stored.

In k 4914, a key instance (Key instance) (also referred to as a Key object) of SceneEncryptionKey is stored.

In kid 4915, an identifier (Key ID) corresponding to SceneEncryptionKeyID 472 (FIG. 21) in Encryption 4623 (FIG. 12) or Encryption 4633 (FIG. 13) of the SceneMode object 41 (FIG. 11) is stored.

Additional Properties 4916 stores additional information. This Additional Properties 4916 may be used for various purposes.

### 2.3 Operation sequence example when model data is encrypted

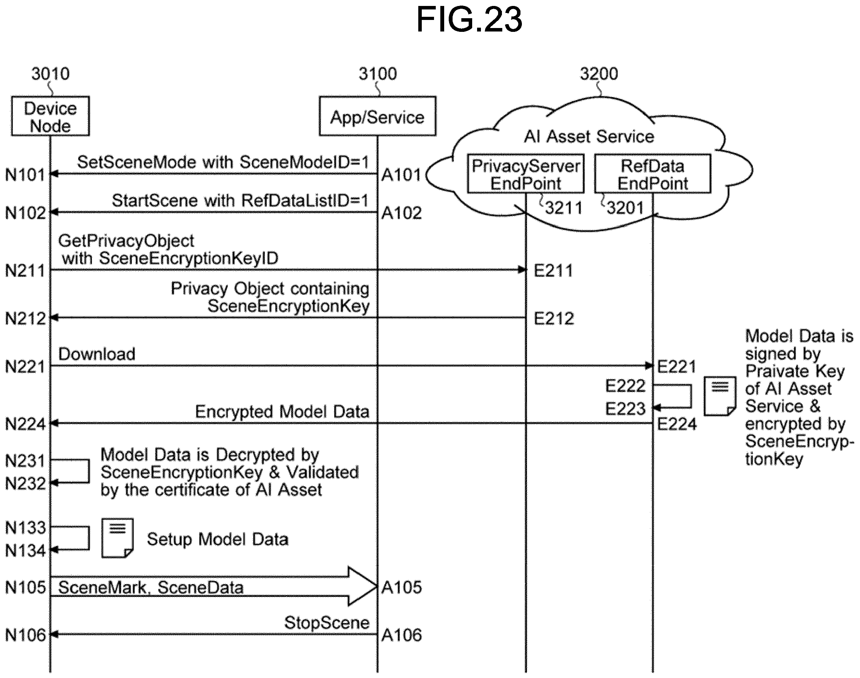

An operation sequence when the reference data is encrypted will be described. FIG. 23 is a sequence diagram illustrating an example of the operation sequence according to the present embodiment. In FIG. 23 and the following description, the capability acquisition phase P10 is omitted for simplification of the description. In the following description, operations similar to those in the operation sequence illustrated in FIG. 17 or FIG. 18 are given the same reference signs.

### (Mode setting phase P20)

As illustrated in FIG. 23, in this operation, similarly to FIG. 18, the instruction (SetSceneMode) regarding which SceneMode will be used is notified from the application/service 3100 to the node 3010 (A101 → N101).

### (First execution phase P30)

Next, the instruction (StartScene) for starting the inference using reference data of RefDataListID = 1 (FIG. 12) in SceneMode with SceneModeID = 1 specified by SetSceneMode is notified from the application/service 3100 to the node 3010 (A102 → N102).

On the other hand, the node 3010 accesses a PrivacyServer endpoint 3211 in the resource server 3200 (N211 → E211) based on the PrivacyServerEndPoint 473 (FIG. 21) in Encryption 4623 (FIG. 12) of the SceneMode object 41 (FIG. 11), and downloads a Privacy object 48 in which the SceneEncryptionKeyID stored in the PrivacyServer endpoint 3211 matches the SceneEncryptionKeyID 472 (FIG. 21) in Encryption 4623 (FIG. 12) (E212 → N212).

Subsequently, to download the encrypted reference data, the node 3010 accesses an endpoint 3101 (hereinafter, in order to distinguish from the PrivacyServer endpoint 3211, this is referred to as a RefData endpoint) in the resource server 3200 based on RefDataEndPoint 4622 (FIG. 12) stored in RefDataList 442 with RefDataListID = 1 in SceneMode with SceneModeID = 1 specified by SetSceneMode (N221 → E221).

The node 3010 to the RefData endpoint 3201 accessed performs signing of the reference data requested from the node 3010 by using the private key of the resource server 3200, encrypt the reference data with SceneEncryptionKey (E222 → E223), and transmit the encrypted reference data to the node 3010 (E224 → N224).

The node 3010 that has obtained the encrypted reference data decrypts the reference data using k 4914 (i.e., SceneEncryptionKey) in the Privacy object 48 and performs authentication using a certificate of the resource server 3200 to validate the decrypted reference data (N231 → N232).

Then, the node 3010 executes setup of the validated reference data (N133 → N134).

Subsequently, similarly to FIG. 17, the node 3010 generates SceneMark and SceneData by using the reference data set up based on the data acquired by the sensor unit 2300, and transmits SceneMark and SceneData to the application/service 3100 (N105 → A105).

### (First end phase P40)

Next, similar to FIG. 17, the instruction (StopScene) for terminating the SceneMode being executed is notified from the application/service 3100 to the node 3010 (from A106 to N106), and in response to this, the node 3010 terminates the SceneMode being executed.

### 2.4 Summary

As described above, according to the present embodiment, the reference data to be downloaded is signed and encrypted. As a result, the reference data can be downloaded in a secure state, and the information processing apparatus can be protected from leakage, falsification, and the like of information, so that it is possible to more reliably provide the user with a function according to the use case.

Other configurations, operations, and effects may be similar to those of the above-described embodiment or the modified examples thereof, and thus detailed description thereof is omitted here.

### 3. Third embodiment

In a third embodiment, an implementation example of the information processing system 1 according to the above-described embodiments or modified examples thereof will be described. Note that, in the following description, a case where the sensor device 10 is an in-vehicle camera, and the information processing system 1 is applied to a driving support system that performs driving support of level 2 will be described as an example.

### 3.1 Implementation example

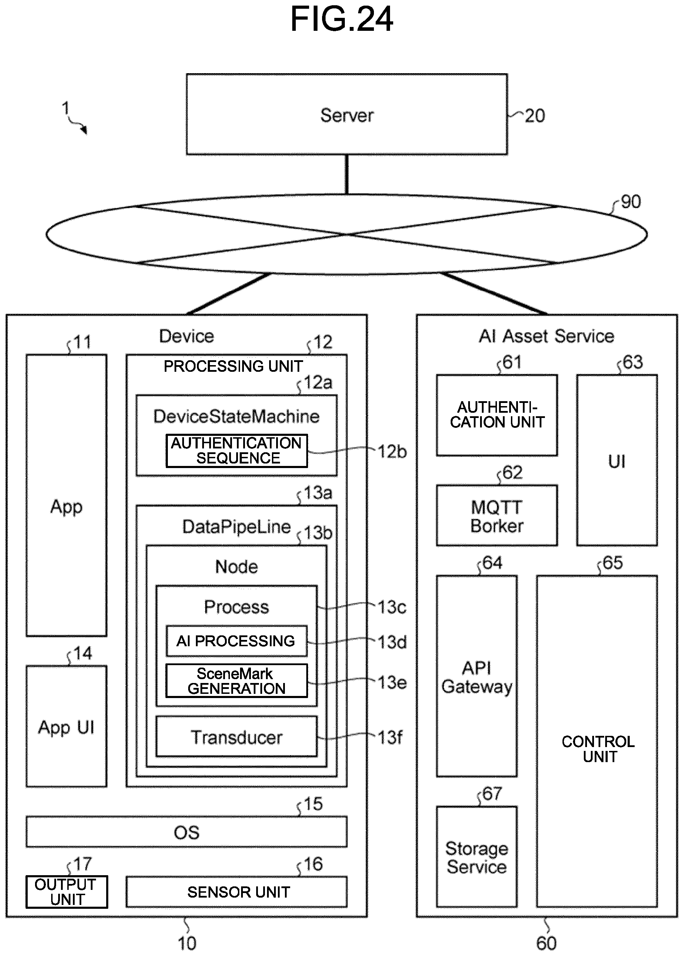

FIG. 24 is a block diagram illustrating the implementation example of the information processing system according to the present embodiment. In the implementation example illustrated in FIG. 24, the sensor device 10, the service server 20, and a resource server 60 are connected via a network 90, and an application 11 that provides a service to a user is implemented in the sensor device 10.

### (Sensor device 10)

As illustrated in FIG. 24, in the implementation example, the sensor device 10 includes a processing unit 12, an application user interface (App UI) 14, an operating system (OS) 15, a sensor unit 16, and an output unit 17 in addition to the application 11.

In this configuration, the application 11 is a driving support application corresponding to the application 2001 described above. The processing unit 12 corresponds to the processing unit 2200 described above, and executes various recognition processes necessary for driving support such as inter-vehicle distance detection, lane deviation detection, tailgating detection, and pedestrian detection. The sensor unit 16 corresponds to the sensor unit 2300 described above, and generates image data obtained by capturing the front, rear, side, and the like of the vehicle.

In the present implementation example, the processing unit 12 includes a device state machine 12a and a data pipeline 13a. The device state machine 12a includes an authentication sequence 12b, and performs user authentication with an authentication unit 61 in the resource server 60 according to the authentication sequence 12b. The data pipeline 13a includes a node 13b capable of executing a process 13c and a transducer 13f. The node 13b corresponds to the node 3010 described above. The process 13c corresponds to the process 3011 described above, and can execute AI processing 13d and SceneMark generation 13e.

In addition, an operating system 15 is an operating system installed to operate the sensor device 10. An application user interface 114 is, for example, a user interface that receives an instruction input from the user and provides various types of information such as a front camera image and navigation to the user via the output unit 17. The output unit 17 includes a display, a speaker, and the like, and outputs information from the application user interface 14 to the user.

### (Resource server 60)

The resource server 60 corresponds to the resource server 3200 described above, and includes an authentication unit 61, an MQTT broker 62, a user interface 63, an API gateway 64, a control unit 65, and a storage unit 67. Note that the storage unit 67 corresponds to, for example, the RefData endpoint 3201 and/or the PrivacyServer endpoint 3211 described above.

### 3.2 Operation example

Next, an operation example of the information processing system 1 illustrated in FIG. 24 will be described. In the present implementation example, first, user authentication is executed after activation. In the user authentication, the device state machine 12a accesses the authentication unit 61 of the resource server 60 according to the authentication sequence 12b in response to a service start request by the API, conforming to the NICE specification, from the application 11, whereby the user authentication is executed with the authentication unit 61. When the user authentication is successful and the activation is completed, the node 13b transmits an update request of the AI model to the resource server 60. Note that, since it is also assumed that the AI model is not updated, the node 13b may be started in parallel with the start of the application 11 regardless of whether the user authentication is successful. Node 13b may then generate the process 13c and the transducer 13f after activation and transit to an event-waiting state.

The update request of the AI model sent to the resource server 60 is input to the control unit 65 via the MQTT broker 62. When receiving the update request of the AI model, the control unit 65 checks, for example, a version of the reference data implemented in the node 13b, and determines whether or not there is reference data of updated version. When the reference data of updated version exists, for example, the control unit 65 instructs the node 13b to download the reference data of the updated version according to the operation sequence illustrated in FIG. 18 (SetSceneMode, StartSceneMode), and the node 13b acquires the reference data of the updated version from the storage unit 67 of the resource server 60 and implements the acquired reference data in the process 13c. At that time, when the reference data is encrypted, the operation sequence illustrated in FIG. 23 may be executed.

Then, for example, when a change in the device state is detected based on the sensing data input from the sensor unit 16, the node 13b notifies the resource server that the device state is in conflict, and requests the resource server 60 to update the reference data. In response, on the resource server 60 side, a request for updating the AI model is input to the control unit 65 via the MQTT broker 62, and the control unit 65 specifies the AI model adapted to the change of the device state. Then, for example, according to the operation sequence illustrated in FIG. 18, the control unit 65 instructs the node 13b to download the reference data adapted to the change of the device state (SetSceneMode, StartSceneMode), and the node 13b acquires the designated reference data from the storage unit 67 of the resource server 60 and implements the reference data in the process 13c. At that time, when the reference data is encrypted, the operation sequence illustrated in FIG. 23 may be executed.

Note that, in the present implementation example, the case where the sensor device 10 requests the resource server 60 to update the reference data has been exemplified, but the present invention is not limited thereto. For example, the service server 20 may request the resource server 60 to update the reference data in the sensor device 10.

### 4. Hardware configuration

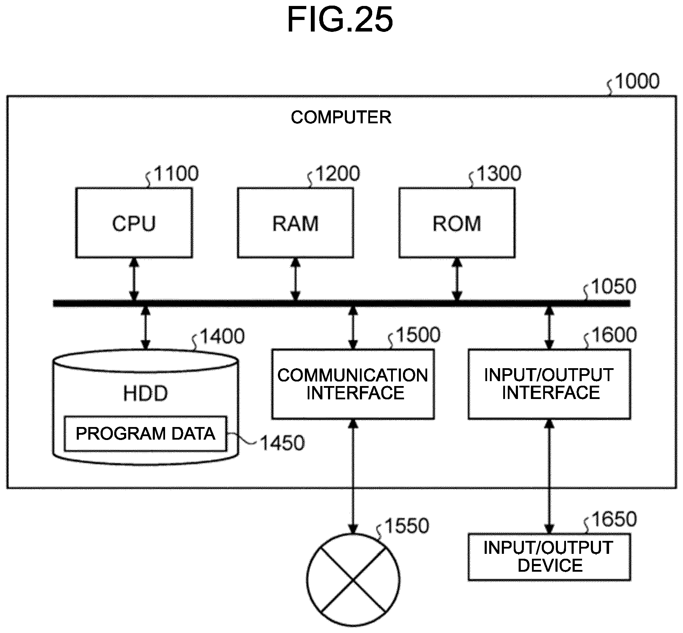

The sensor device 10, the service server 20, the user device 30, the authentication server 40, and the aggregation server 50 according to the embodiments and the modified examples described above can be realized, for example, by a computer 1000 having a configuration as illustrated in FIG. 25. FIG. 25 is a hardware configuration diagram illustrating an example of the computer 1000 that implements the functions of the sensor device 10, the service server 20, the user device 30, the authentication server 40, and the aggregation server 50. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates based on a program stored in the ROM 1300 or the HDD 1400, and controls each unit. For example, the CPU 1100 develops a program stored in the ROM 1300 or the HDD 1400 into the RAM 1200, and executes processes corresponding to various programs.

The ROM 1300 stores a boot program such as a basic input output system (BIOS) executed by the CPU 1100 when the computer 1000 is activated, a program dependent on hardware of the computer 1000, and the like.

The HDD 1400 is a computer-readable recording medium that non-transiently records a program executed by the CPU 1100, data used by the program, and the like. Specifically, the HDD 1400 is a recording medium that records the information processing program according to the present disclosure, which is an example of program data 1450.

The communication interface 1500 is an interface to connect the computer 1000 with an external network 1550 (e.g., the Internet). For example, the CPU 1100 receives data from another device or transmits data generated by the CPU 1100 to another device via the communication interface 1500.

The input/output interface 1600 has a configuration including the I/F unit 18 described above, and is an interface for connecting an input/output device 1650 and the computer 1000. For example, the CPU 1100 receives data from the input/output device such as a keyboard, a mouse, or a microphone (microphone) via the input/output interface 1600. In addition, the CPU 1100 transmits the data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, when the computer 1000 functions as the sensor device 10, the service server 20, the user device 30, the authentication server 40, and the aggregation server 50 according to the above-described embodiment, the CPU 1100 of the computer 1000 realizes the functions of the sensor device 10, the service server 20, the user device 30, the authentication server 40, and the aggregation server 50 by executing a program loaded on the RAM 1200. In addition, the HDD 1400 stores a program and the like according to the present disclosure. Note that the CPU 1100 reads the program data 1450 from the HDD 1400 and executes the program data. As another example, these programs may be acquired from another device via the external network 1550.

The technical scope of the present disclosure is not limited to the above-described embodiments, and various modifications can be made without departing from the gist of the present disclosure. In addition, components of different embodiments and modifications may be appropriately combined.

Note that the effects of each embodiment described in the present specification are merely examples and not limited thereto, and other effects may be provided.

The present technique can also have the following configurations.
(1) An information processing system including:
   a sensor data acquisition unit that acquires sensing data acquired by a sensor;
   a processing unit including an inference unit that executes inference using the sensing data as an input; and
   a switching unit that switches the inference unit according to a use case.
(2) The information processing system according to (1), further including
   a model acquisition unit that acquires reference data, wherein
   the switching unit switches the inference unit by replacing reference data of the inference unit with the reference data acquired by the model acquisition unit.
(3) The information processing system according to (2), wherein
   the model acquisition unit acquires the reference data via a predetermined network.
(4) The information processing system according to (3), further including
   a model holding unit that is arranged on the predetermined network and holds one or more pieces of reference data, wherein
   the model acquisition unit acquires the reference data from the model holding unit via the predetermined network.
(5) The information processing system according to (3), wherein
   the model acquisition unit acquires the reference data from another information processing apparatus arranged on the predetermined network, another information processing apparatus being different from an information processing apparatus including the processing unit.
(6) The information processing system according to any one of (2) to (5), wherein
   the reference data includes at least one of model data configuring the inference unit and a weight parameter set in the model data.
(7) The information processing system according to any one of (2) to (6), further including:
   an aggregation unit that aggregates a distribution amount of the reference data for each device and generates aggregation information; and
   a fee processing unit that determines a usage fee based on the aggregation information.
(8) The information processing system according to any one of (1) to (7), wherein
   the processing unit switches the inference unit according to a processing capability of an information processing apparatus including the processing unit.
(9) The information processing system according to any one of (1) to (8), wherein
   the switching unit switches the inference unit based on at least one of an expiry date and an area of use of the reference data set for a user of an information processing apparatus including the processing unit.
(10) The information processing system according to any one of (1) to (9), further including
   a processing capability management unit that manages a processing capability of an information processing apparatus including the processing unit, wherein
   the switching unit switches the inference unit based on the processing capability of the information processing apparatus including the processing unit managed by the processing capability management unit.
(11) The information processing system according to any one of (1) to (10), wherein
   the sensor data acquisition unit further acquires position information of an information processing apparatus including the processing unit, and
   the switching unit switches the inference unit based on the position information.
(12) The information processing system according to any one of (1) to (11), wherein
   the inference unit outputs data in an output format common to an output format of another inference unit that can be included in the processing unit.
(13) The information processing system according to any one of (1) to (11), further including
   a conversion unit that converts an output format of data output by the inference unit into a predetermined output format.
(14) The information processing system according to any one of (1) to (13), wherein
   the processing unit associates identification information for identifying an output format of data output by the inference unit with the data.
(15) An information processing system including:
   a model acquisition unit that acquires reference data via a predetermined network, the reference data being encrypted;
   a key information acquisition unit that acquires key information for decrypting the reference data; and
   a processing unit that decrypts the reference data using the key information and configures an inference unit using the reference data that is decrypted.
(16) An information processing system including a device, a service server, and a resource server that are connected via a predetermined network, wherein
   the service server transmits, to a node of the device, SetSceneMode instructing setting of SceneMode,
   the service server transmits, to the node, StartScene instructing a start of the SceneMode,
   the node acquires reference data from EndPoint in the resource server designated by the StartScene,
   the node sets up an inference unit by using the reference data,
   the node transmits an inference result of the inference unit to the service server,
   the service server transmits, to the node, StopScene instructing a termination of the SceneMode, and
   the node terminates the SceneMode in response to the StopScene.
(17) An information processing system including a device, a service server, and a resource server that are connected via a predetermined network, wherein
   the service server transmits, to a node of the device, SetSceneMode instructing setting of SceneMode,
   the service server transmits, to the node, StartScene instructing a start of the SceneMode,
   the node acquires a Privacy object from PrivacyServerEndPoint in the resource server designated by the SceneMode,
   the node acquires reference data that is encrypted from RefDataEndPoint in the resource server designated by the StartScene,
   the node decrypts the reference data using the Privacy object,
   the node sets up an inference unit by using the reference data decrypted,
   the node transmits an inference result of the inference unit to the service server,
   the service server transmits, to the node, StopScene instructing a termination of the SceneMode, and
   the node terminates the SceneMode in response to the StopScene.
(18) An information processing method including:
   acquiring sensing data acquired by a sensor;
   configuring an inference unit that executes inference using the sensing data as an input; and
   switching the inference unit according to a use case.
(19) An information processing method including:
   acquiring reference data via a predetermined network, the reference data being encrypted;
   acquiring key information for decrypting the reference data;
   decrypting the reference data using the key information; and
   configuring an inference unit by using the reference data that is decrypted.
(20) An information processing method executed in an information processing system in which a device, a service server, and a resource server are connected via a predetermined network, the method including:
   transmitting, by the service server, SetSceneMode to a node of the device, the SetSceneMode instructing setting of SceneMode,
   transmitting, by the service server, StartScene to the node, the StartScene instructing a start of the SceneMode,
   acquiring, by the node, reference data from EndPoint in the resource server designated by the StartScene,
   setting up, by the node, an inference unit by using the reference data,
   transmitting, by the node, an inference result of the inference unit to the service server,
   transmitting, by the service server, StopScene to the node, StopScene instructing a termination of the SceneMode, and
   terminating, by the node, the SceneMode in response to the StopScene.
(21) An information processing method executed in an information processing system in which a device, a service server, and a resource server are connected via a predetermined network, the method including:
   transmitting, by the service server, SetSceneMode to a node of the device, the SetSceneMode instructing setting of SceneMode,
   transmitting, by the service server, StartScene to the node, the StartScene instructing a start of the SceneMode,
   acquiring, by the node, a Privacy object from PrivacyServerEndPoint in the resource server designated by the SceneMode,
   acquiring, by the node, reference data that is encrypted from RefDataEndPoint in the resource server designated by StartScene,
   decrypting, by the node, the reference data using the Privacy object,
   setting up, by the node, an inference unit by using the reference data that is decrypted,
   transmitting, by the node, an inference result of the inference unit to the service server,
   transmitting, by the service server, StopScene to the node, the StopScene instructing a termination of the SceneMode, and
   terminating, by the node, the SceneMode in response to the StopScene.

### Reference Signs List

1 INFORMATION PROCESSING SYSTEM
10, 10a, 10b, 10c SENSOR DEVICE
20 SERVICE SERVER
30, 30a, 30b, 30c USER DEVICE
40 AUTHENTICATION SERVER
50 AGGREGATION SERVER
60 RESOURCE SERVER
70 MODEL DATA
71 HEADER
72 BODY
90 NETWORK
100, 2300A, 2300B SENSOR UNIT
110 POSITIONING UNIT
130, 230, 530, 2200A, 2200B PROCESSING UNIT
132, 232 ID TRANSMISSION UNIT
134 KEY RECEPTION UNIT
136 SENSOR DATA ACQUISITION UNIT
138 PREPROCESSING UNIT
140 MODEL ACQUISITION UNIT
142 RECOGNITION UNIT
144 DATA GENERATION UNIT
146, 246 DISTRIBUTION UNIT
148 AGGREGATION UNIT
150 AGGREGATION INFORMATION TRANSMISSION UNIT
160, 260, 560 STORAGE UNIT
170, 270, 570 COMMUNICATION UNIT
234 REQUEST ACCEPTANCE UNIT
236 CAPABILITY INFORMATION ACQUISITION UNIT
238 MODEL GENERATION UNIT
238a LEARNING DEVICE
240 MODEL TRANSMISSION UNIT
242 DATA ACQUISITION UNIT
532 AGGREGATION INFORMATION ACQUISITION UNIT
534 FEE PROCESSING UNIT
600-1 to 600-n OBJECT
602-1 to 602-n SUPERVISED DATA
610 RECOGNITION MODEL
2001 APPLICATION
2002 APPLICATION LIST
2100 SERVICE UNIT
2101 AI NETWORK UNIT
2102 ANALYSIS UNIT
2103A, 2103B DATA PIPELINE UNIT
2201 CPU
2202, 2302 SIGNAL PROCESSING UNIT
2203 INFERENCE UNIT
2301 SENSOR
2303 RECOGNITION UNIT
2304 INFERENCE UNIT
3000 DEVICE
3010, 3010A, 3010B, 3010C, 3010-1 to 3010-N NODE
3011 PROCESS
3012 REFERENCE DATA
3013 AI FRAMEWORK
3100 APPLICATION/SERVICE
3200 RESOURCE SERVER
3201 ENDPOINT (RefData ENDPOINT)
3211 PrivacyServer ENDPOINT
3220 MODEL LIST
41 SceneMode OBJECT
42 LabelRefDataList
43, 452, 453 OBJECT
47 Encryption OBJECT
48 Privacy OBJECT
441 LabelName
442 RefDataList
443 RefData
444 Processing Stage
445, 474, 493, 504, 4624, 4634, 4916 Additional Properties
471 EncryptionOn
472 SceneEncryptionKeyID
473 PrivacyServerEndPoint
481 Version
482 EndPointID
483 PrivacyObjectID
484 StartDateTime
485 EndDateTime
486 UsageCount
487 StorageRule
488 ExportRule
489 MaskedItems
490 AnalysisRule
491 Encryption
492 Authentication
500 StartScene OBJECT
501 Version
502 SceneModeID
503 RefDataID/RefDataListID
4621 RefDataID
4622 RefDataEndPoint
4623 Encryption
4631 RedDataID
4632 RefData
4633 Encryption
4911 SymmetricKey OBJECT
4912 kty
4913 alg
4914 k
4915 kid

## Claims

1. An information processing system including:
a sensor data acquisition unit that acquires sensing data acquired by a sensor;
a processing unit including an inference unit that executes inference using the sensing data as an input; and
a switching unit that switches the inference unit according to a use case.

2. The information processing system according to claim 1, further including
a model acquisition unit that acquires reference data, wherein
the switching unit switches the inference unit by replacing reference data of the inference unit with the reference data acquired by the model acquisition unit.

3. The information processing system according to claim 2, wherein
the model acquisition unit acquires the reference data via a predetermined network.

4. The information processing system according to claim 3, further including
a model holding unit that is arranged on the predetermined network and holds one or more pieces of reference data, wherein
the model acquisition unit acquires the reference data from the model holding unit via the predetermined network.

5. The information processing system according to claim 3, wherein
the model acquisition unit acquires the reference data from another information processing apparatus arranged on the predetermined network, another information processing apparatus being different from an information processing apparatus including the processing unit.

6. The information processing system according to claim 2, wherein
the reference data includes at least one of model data configuring the inference unit and a weight parameter set in the model data.

7. The information processing system according to claim 2, further including:
an aggregation unit that aggregates a distribution amount of the reference data for each device and generates aggregation information; and
a fee processing unit that determines a usage fee based on the aggregation information.

8. The information processing system according to claim 1, wherein
the processing unit switches the inference unit according to a processing capability of an information processing apparatus including the processing unit.

9. The information processing system according to claim 1, wherein
the switching unit switches the inference unit based on at least one of an expiry date and an area of use of the reference data set for a user of an information processing apparatus including the processing unit.

10. The information processing system according to claim 1, further including
a processing capability management unit that manages a processing capability of an information processing apparatus including the processing unit, wherein
the switching unit switches the inference unit based on the processing capability of the information processing apparatus including the processing unit managed by the processing capability management unit.

11. The information processing system according to claim 1, wherein
the sensor data acquisition unit further acquires position information of an information processing apparatus including the processing unit, and
the switching unit switches the inference unit based on the position information.

12. The information processing system according to claim 1, wherein
the inference unit outputs data in an output format common to an output format of another inference unit that can be included in the processing unit.

13. The information processing system according to claim 1, further including
a conversion unit that converts an output format of data output by the inference unit into a predetermined output format.

14. The information processing system according to claim 1, wherein
the processing unit associates identification information for identifying an output format of data output by the inference unit with the data.

15. An information processing system including:
a model acquisition unit that acquires reference data via a predetermined network, the reference data being encrypted;
a key information acquisition unit that acquires key information for decrypting the reference data; and
a processing unit that decrypts the reference data using the key information and configures an inference unit using the reference data that is decrypted.

16. An information processing system including a device, a service server, and a resource server that are connected via a predetermined network, wherein
the service server transmits, to a node of the device, SetSceneMode instructing setting of SceneMode,
the service server transmits, to the node, StartScene instructing a start of the SceneMode,
the node acquires reference data from EndPoint in the resource server designated by the StartScene,
the node sets up an inference unit by using the reference data,
the node transmits an inference result of the inference unit to the service server,
the service server transmits, to the node, StopScene instructing a termination of the SceneMode, and
the node terminates the SceneMode in response to the StopScene.

17. An information processing system including a device, a service server, and a resource server that are connected via a predetermined network, wherein
the service server transmits, to a node of the device, SetSceneMode instructing setting of SceneMode,
the service server transmits, to the node, StartScene instructing a start of the SceneMode,
the node acquires a Privacy object from PrivacyServerEndPoint in the resource server designated by the SceneMode,
the node acquires reference data that is encrypted from RefDataEndPoint in the resource server designated by the StartScene,
the node decrypts the reference data using the Privacy object,
the node sets up an inference unit by using the reference data decrypted,
the node transmits an inference result of the inference unit to the service server,
the service server transmits, to the node, StopScene instructing a termination of the SceneMode, and
the node terminates the SceneMode in response to the StopScene.

18. An information processing method including:
acquiring sensing data acquired by a sensor;
configuring an inference unit that executes inference using the sensing data as an input; and
switching the inference unit according to a use case.

19. An information processing method including:
acquiring reference data via a predetermined network, the reference data being encrypted;
acquiring key information for decrypting the reference data;
decrypting the reference data using the key information; and
configuring an inference unit by using the reference data that is decrypted.

20. An information processing method executed in an information processing system in which a device, a service server, and a resource server are connected via a predetermined network, the method including:
transmitting, by the service server, SetSceneMode to a node of the device, the SetSceneMode instructing setting of SceneMode,
transmitting, by the service server, StartScene to the node, the StartScene instructing a start of the SceneMode,
acquiring, by the node, reference data from EndPoint in the resource server designated by the StartScene,
setting up, by the node, an inference unit by using the reference data,
transmitting, by the node, an inference result of the inference unit to the service server,
transmitting, by the service server, StopScene to the node, StopScene instructing a termination of the SceneMode, and
terminating, by the node, the SceneMode in response to the StopScene.

21. An information processing method executed in an information processing system in which a device, a service server, and a resource server are connected via a predetermined network, the method including:
transmitting, by the service server, SetSceneMode to a node of the device, the SetSceneMode instructing setting of SceneMode,
transmitting, by the service server, StartScene to the node, the StartScene instructing a start of the SceneMode,
acquiring, by the node, a Privacy object from PrivacyServerEndPoint in the resource server designated by the SceneMode,
acquiring, by the node, reference data that is encrypted from RefDataEndPoint in the resource server designated by StartScene,
decrypting, by the node, the reference data using the Privacy object,
setting up, by the node, an inference unit by using the reference data that is decrypted,
transmitting, by the node, an inference result of the inference unit to the service server,
transmitting, by the service server, StopScene to the node, the StopScene instructing a termination of the SceneMode, and
terminating, by the node, the SceneMode in response to the StopScene.
